# EUROPEAN PATENT SPECIFICATION

(11) **EP 4 392 368 B1**
(45) Date of publication and mention of the grant of the patent: **10.12.2025**
(21) Application number: 22768823.1
(22) Date of filing: 25.08.2022
(51) Int. Cl.: C01B 21/26, B01D 53/56, C01B 21/28, C01B 21/38

(54) **DUAL PRESSURE SYSTEM FOR PRODUCING NITRIC ACID AND METHOD OF OPERATING THEREOF**
DOPPELDRUCKSYSTEM ZUR HERSTELLUNG VON SALPETERSÄURE UND VERFAHREN ZUM BETRIEB DAVON
SYSTÈME À DOUBLE PRESSION DESTINÉ À LA PRODUCTION D'ACIDE NITRIQUE ET SON PROCÉDÉ DE FONCTIONNEMENT

(30) Priority: 25.08.2021 EP 21193029; 11.01.2022 EP 22150904
(43) Date of publication of application: 03.07.2024
(73) Proprietor: Yara International ASA, 0277 Oslo (NO)
(72) Inventor: VIGELAND, Bent, 3714 Skien (NO); ØIEN, Halvor, 3943 Porsgrunn (NO); FAUCONNIER, Peter, 1850 Grimbergen (BE); DE SMET, Andre, 4535 JH Terneuzen (NL)
(74) Representative: De Clercq & Partners
(86) International application number: PCT/EP2022/073638
(87) International publication number: WO 2023/025868

(56) References cited:
- DE-A1- 102013 004 341
- US-B1- 6 264 910
- "Latest nitric acid process design", NITROGEN,, no. 165, 1 January 1987 (1987-01-01), pages 32 - 40, XP001266113

## Description

### Field

The present disclosure relates to the field of nitric acid production in a dual pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in several stages. The ammonia is first oxidized in an ammonia burner on platinum gauzes (commonly called ammonia converter) or cobalt balls, producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower in which the NOₓ gases are absorbed.

By absorption in water, following compression through a NOₓ gas compressor, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono pressure (single-pressure) and dual pressure (split-pressure) process.

In a dual pressure process, the absorber unit operates at a higher working pressure than the ammonia converter. Modern dual pressure processes feature a low-pressure ammonia converter operating typically at 2 to 6 bara, and a high-pressure absorber unit operating at 9 to 16 bara.

A dual pressure process requires an air compressor to feed low-pressure air (which comprises about 21 vol% of oxygen) to the converter, and a NOₓ gas compressor to feed high-pressure NOₓ gases to the absorber unit. The working pressure of an air compressor is from 2 to 6 bara, inclusive, and the working pressure of a NOₓ gas compressor is from 9 to 16 bara, inclusive.

The drive power for the air compressor typically originates from a tail gas turbine and a steam turbine or a power source such as an electric motor. Accordingly, the compressor train of a dual pressure nitric acid production plant typically comprises an air compressor, a NOₓ gas compressor, a tail gas turbine, and a steam turbine or a power source such as an electric motor.

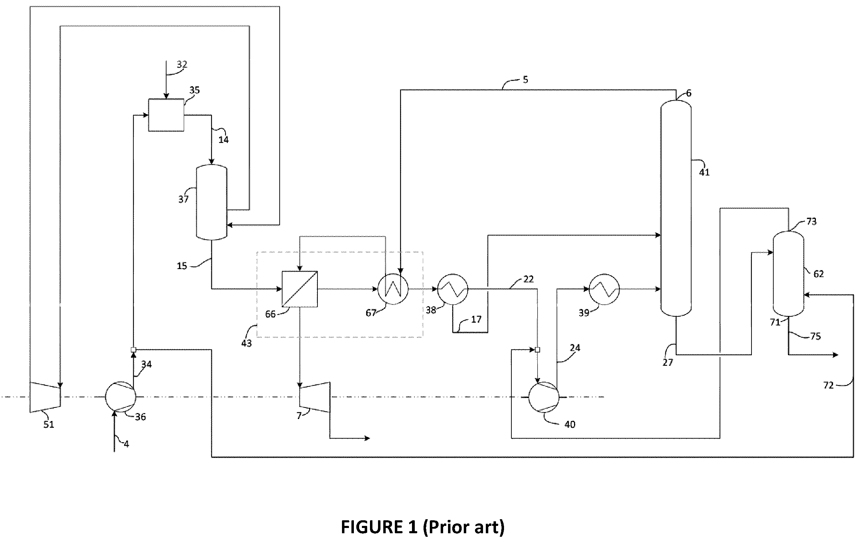

More in detail, referring to Figure 1, a dual pressure plant and process according to the prior art works as follows. Gaseous ammonia **32,** optionally pre-heated in a pre-heater unit (not shown) is mixed with compressed air **34** pressurised to a low pressure using an air compressor **36,** in a mixing apparatus **35,** and the resulting ammonia/oxygen-enriched air mixture **14** is fed to an ammonia converter **37,** operating at a low pressure, where ammonia is oxidized over a suitable catalyst, thus obtaining a LP NOₓ gas/steam mixture **15,** comprising water and nitric oxide (NO). The heat of the mixture coming out of the ammonia converter is recovered, after which the NOₓ gas/stream mixture is subsequently cooled down in a gas cooler/condenser **38** to temperature where the water condenses, and an aqueous diluted nitric acid mixture **17** is separated from a gaseous NOₓ stream **22.** The gaseous NOₓ stream **22** is sent to a NOₓ gas compressor **40** wherein its pressure is elevated from a low pressure to a high pressure, being about equal to an absorber unit, **41,** operating pressure, and the pressurized gaseous NOₓ stream **24** is sent to the absorber to the absorber unit **41,** commonly called absorption tower. The pressurised NOₓ gas stream **24** is further oxidized to further convert the NO to NO₂ and N₂O₄, cooled in an additional gas cooler/condenser **39** and then directed to the absorption tower **41** too. Inside the absorption tower **41,** the pressurized NOₓ gas stream **24** reacts with water to produce the tail gas **5** and a stream of raw nitric acid **27** also containing residual NOₓ gas, which is fed to a bleacher **62.** The residual NOₓ gas in the raw nitric acid stream **27** is then stripped out with a gaseous medium **72** such as an oxygen-containing gas or air, inside the bleacher unit **62** operating at low-pressure; the bleacher unit is generally operated at about the same pressure as the ammonia converter. The drive power for both the air compressor **36** and the NOₓ gas compressor **40** originates from a tail gas expander **7** and a steam turbine **51** or a power source such as an electric motor (not shown). The heat generated in the ammonia converter **37** is used for heating the tail gas **5** in the tail gas heat exchanger **43** comprising the heat exchangers **66** and **67,** the tail gas heater being therefore optionally present. The tail gas **5** exchanges heat with the NOₓ gas/steam mixture **15** in the heat exchange system **43** and is expanded in the tail gas expander **7.**

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. The increase of the primary air also causes a higher amount of gas to be processed subsequently into the NOₓ gas compressor. This entails the further revamping of the NOₓ gas compressor or the installation of a new one, and the modification or replacement of the tail gas and/or the steam-turbines and/or the electrical motor. Otherwise, the NOₓ gas compressor would easily achieve its process limit, thus becoming the bottleneck of the plant.

However, the revamping has significant drawbacks. First of all, it entails elevated costs for the modification or replacement of the existing equipment, i.e. the air compressor, the NOₓ gas compressor and the corresponding turbines and electrical motor. In addition, the revamping of the equipment is also technically demanding leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a dual nitric acid plant.

### Background Prior Art

In CN110540178A (China Chengda Engineering Co Ltd, 2019), process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high-pressure and then recycle NOₓ gases to the delivery side of the NOₓ gas compressor. Further plants for producing nitric acid are known from DE102013004341A and US6264910B.

Therefore, there remains a need for a process and a corresponding plant setup for minimizing or even suppressing the amount of energy required in order to operate the NOₓ gas compressor and, preferably, also the air compressor, in order to avoid bottlenecks in the nitric acid production throughput associated with those compressors.

### Summary

In one aspect of the disclosure, a production plant for producing nitric acid at reduced power consumption and reduced emissions, comprising, optionally, a source of pressurised air in fluid communication with the production plant, is disclosed. The system comprises:
- a source of an oxygen-rich gas, particularly a source of pressurized oxygen-rich gas, such as a high pressure water electrolyzer;
- a mixing apparatus downstream the source of oxygen-rich gas, for mixing a first oxygen-containing gas with an ammonia gas stream, to produce an ammonia/oxygen-containing gas mixture;
- an ammonia converter, particularly operable at a pressure equal to or higher than P1 and lower than P2, for oxidising ammonia in the ammonia/oxygen-containing gas mixture, to produce a NOx gas/steam mixture comprising water and nitric oxide;
- a means for regulating the concentration of ammonia and/or of oxygen in the ammonia converter, particularly a means for controlling the flow of the oxygen-rich gas and/or a means for controlling the flow of the ammonia gas stream, for maintaining the oxygen to ammonia molar ratio inside the ammonia converter at a ratio of at least 1.2;
- a first gas cooler/condenser downstream the ammonia converter, to produce an aqueous diluted nitric acid mixture and a gaseous NOₓ stream;
- a NOₓ gas compressor for compressing the gaseous NOₓ stream, to produce a compressed NOₓ gas stream at a pressure P2;
- an absorption tower for absorbing the NOₓ gases from the compressed NOₓ gas stream in water, to produce a stream of raw nitric acid containing residual NOₓ gas, and a tail gas comprising NOₓ gases, comprising an absorption tower tail gas outlet for evacuating the tail gas;
- a heat exchange system located upstream the gas cooler/condenser for exchanging heat between the NOₓ gas/steam mixture and the tail gas, in particular for heating a tail gas stream with the heat from the NOx gas/steam coming from the ammonia converter;
- a second gas cooler/condenser for separating and condensing steam from the compressed NOx gas stream, particularly before the compressed NOx gas stream is provided to the absorption tower.
- a supply for a second oxygen-containing gas having either (i) a pressure equal to or higher than P1 and up to Pc, for supplying oxygen downstream the ammonia converter and upstream the NOx gas compressor, or (ii) a pressure higher than P2, for supplying oxygen to the compressed NOx gas stream,
- a means for controlling the flow of the second oxygen-containing gas, such that a tail gas stream contains at least 0.5% by volume oxygen; and
- a first pressure release means, in particular tail gas expander, located downstream the heat exchange system, for expanding a stream of tail gas downstream the absorption tower, to produce a first expanded tail gas at a pressure equal to or higher than P1 and lower than P2, wherein the first pressure release means, in particular the tail gas expander, can at least partly power the NOₓ gas compressor;
characterised in that the production plant further comprises:
- a means for splitting a tail gas into a first tail gas stream and a second tail gas stream, wherein the first tail gas is in fluid communication with the oxygen-rich gas, particularly wherein the first tail gas stream has a pressure equal to or higher than P1 and up to P2, and wherein the mixing of the oxygen-rich gas and the first tail gas stream provides the first oxygen-containing gas.

The inventors have found that, instead of continuously supplying compressed air provided by an air compressor as primary air to the mixing unit, it is possible to recirculate the first tail gas stream provided by the means for splitting at a pressure P1, particularly when combined with, at the same time, providing oxygen, particularly pressurized oxygen, to the system. Therefore, compressed or pressurized air only has to be supplied in order to start the process, in particular to pressurize the plant or system at startup, but no longer after the production of the tail gas has started. An air compressor is thus not required for operating the nitric acid plant. In this context, an air compressor suitable for pressurizing the plant has a capacity of about 2000 to 19000 m³/h, which is much smaller than an air compressor for operating a prior art nitric acid plant, with a capacity of at least 300000 m³/h. In a dual pressure nitric acid plant, the tail gas has a pressure higher than P1 and, therefore, a first pressure release means, such as a the tail gas expander, can be used to expand a tail gas stream to a pressure P1. In addition, a first oxygen-rich gas having a pressure equal to or higher than P1 and up to P2 and a second oxygen-rich gas having a pressure higher than P2, provide oxygen to the ammonia converter and to the absorption tower, respectively, such that, in the absence of the primary and secondary air provided by the air compressor, the concentration of oxygen in the ammonia converter and in the absorption tower is similar to that in a standard dual pressure nitric acid plant.

In the absence of an air compressor and with the first tail gas stream being recirculated in the system, not only is the power demand of the system reduced, but the NOₓ emissions leaving the system are also reduced. Therefore, the size of the treatment unit for treating those NOₓ emissions is reduced with respect to the size in the corresponding standard dual pressure nitric acid plant. The system of the present disclosure thus achieves a significant power reduction together with a reduction of the area footprint of the plant and the simplification of the system, by the removal of the air compressor and reducing the size of the tail gas expander. In addition, the separate supply of the pressurized oxygen or oxygen-rich gas ensures an optimal conversion of ammonia to nitric oxide.

In one embodiment according to the production plant of the disclosure, the system further comprises one or more of:
- a steam turbine, wherein the steam turbine can at least partly power the NOₓ gas compressor;
- a heat exchanger for exchanging heat between the first expanded tail gas and a colder tail gas stream, wherein the first expanded tail gas exits the heat exchanger particularly at a temperature below 300 °C, and wherein the means for splitting is positioned downstream the heat exchanger and in fluid communication with the first expanded tail gas;
- a De-NOₓ treatment unit; and
- a second pressure release means for expanding the second tail gas stream to atmospheric pressure, to produce a second expanded tail gas.

In one embodiment according to the production plant of the disclosure, the system further comprises a bleacher for bleaching the stream of raw nitric acid-containing residual NOx gas, to provide a stream of bleached nitric acid, having an inlet for an oxygen-rich bleaching gas, and an outlet for off-gases in fluid communication with any gas stream downstream the ammonia converter and upstream the NOx gas compressor if the bleacher operates at a pressure equal to or higher than P1 and up to equal to P2, or in fluid communication with any stream downstream the NOx gas compressor and upstream the absorption tower if the bleacher operates at a pressure higher than P2, such that the supply for the second oxygen containing gas comes at least partly from the off-gases..

In one embodiment according to the production plant of the disclosure, part of the oxygen-rich gas or part of the first oxygen-containing gas or part of the tail gas, is in fluid communication with the inlet of the bleacher, such that the oxygen rich-bleaching gas is at least partly provided by part of the oxygen-rich gas by part of the first oxygen-containing gas or by part of a tail gas stream.

In one embodiment according to the production plant of the disclosure, the system further comprises a stream of a second oxygen-containing gas in direct fluid communication with any tail gas stream, particularly a stream of pressurized oxygen-rich gas in direct fluid communication with any stream of tail gas downstream the absorption tower or upstream the first pressure release means.

In one embodiment according to the production plant of the disclosure, the oxygen-rich gas, the second oxygen-containing gas, the oxygen-rich bleaching gas and the bleacher off-gases are all at least partly provided by a water electrolyser, particularly a high pressure water electrolyser.

In one embodiment according to the production plant of the disclosure, the fluid communication between the source of pressurised air and the system is in direct fluid communication with the oxygen-rich gas.

In one aspect of the disclosure, a method for producing nitric acid at reduced power consumption and reduced emissions, in a production plant according to the production plant of the disclosure, is disclosed. The method comprises the steps of:
prior to step c), providing or preparing an oxygen-rich gas and a first oxygen-containing gas, and providing an ammonia gas stream;
c) supplying the ammonia gas stream and a first oxygen-containing gas to the mixing apparatus, thereby producing the ammonia/oxygen-containing gas mixture;
d) oxidising ammonia in the ammonia/oxygen-containing gas mixture in the ammonia converter, particularlyat a pressure equal to or higher than P1 and lower than P2 and at a temperature ranging from 800 to 950 °C, thereby producing the gaseous NOx gas/steam mixture, comprising water and nitric oxide;
e) cooling the NOx gas in the gaseous NOx gas/steam mixture in the heat exchange system and in the first gas/cooler condenser, thereby producing an aqueous diluted nitric acid mixture and a gaseous NOx stream;
f) compressing the gaseous NOₓ stream in the NOₓ gas compressor, thereby providing the pressurized NOx compressed gas stream having a pressure P2;
g) absorbing the pressurized gaseous NOₓ stream in the absorption tower, thereby providing the stream of raw nitric acid-containing residual NOx gas and the tail gas comprising NOₓ gases;
h) heating the tail gas in the heat exchange system, with the heat from the NOₓ gas/steam mixture coming from the ammonia converter, particularly to a temperature ranging from 150 to 650 °C;
i) cooling the pressurized NOx gas stream in the second gas cooler/condenser, thereby providing a pressurized NOₓ gas stream, particularly having a temperature ranging from 20 to 60 °C; and
j) expanding at least part of the tail gas obtained in step h) in a first pressure release means, thereby providing a first expanded tail gas;
characterised in that the method further comprises the steps of:
   k) splitting a tail gas stream with a first means for splitting into a first tail gas stream and a second tail gas stream, and mixing the first tail gas stream with the oxygen-rich gas, thereby providing the first oxygen-containing gas;
   m) adjusting the flow of the oxygen-rich gas being mixed in step k) or the flow of the ammonia gas stream, such that the oxygen to ammonia molar ratio at the inlet of the ammonia converter is maintained to a ratio of at least 1.2 or at least 1.25, particularly between 1.2 and 9 or between 1.25 and 9; and
   q) adjusting the flow of the oxygen-rich gas at a pressure equal to or higher than P1 and up to P2 upstream the NOₓ gas compressor, or at a pressure higher than P2 downstream the NOₓ gas compressor, such that the oxygen concentration in a tail gas stream is maintained at a concentration of at least 0.5% by volume;

In one embodiment according to the method of the disclosure, the first tail gas stream, particularly first expanded tail gas stream, mixed in step k) is particularly obtained after step j), and wherein the method further comprises the steps of:
s) particularly before step k), heating up, in the heat exchanger, a tail gas stream that is colder than the first expanded tail gas with the first expanded tail gas, thereby bringing the first expanded tail gas to a temperature below 300°C, in particular before step k), heating up, in the heat exchanger the tail gas obtained in step g) with the first expanded tail gas obtained in step j), thereby bringing the tail gas to be mixed in step k) to a temperature below 300 °C;
t) treating the tail gas stream, particularly obtained in step s, in the De-NOₓ treatment unit;
u) expanding the second tail gas stream in the second pressure release means, thereby providing the second expanded tail gas; and
v) recovering at least part of the steam generated in the ammonia converter in the steam turbine.

In one embodiment according to the method of the disclosure, the method further comprises the step of:
w) bleaching the stream of raw nitric acid-containing residual NOₓ gas in the bleacher, thereby producing the stream of bleached nitric acid.

In one embodiment according to the method of the disclosure, the method further comprises the step of:
w1) supplying part of the oxygen-rich or part of the first oxygen-containing gas obtained in step k) or part of the tail gas obtained in step g), to the inlet of the bleacher in step w).

In one embodiment according to the method of the disclosure, the method further comprises the step of:
x) supplying a stream of an oxygen-rich gas, particularly as a stream of a pressurized oxygen-rich gas, to a tail gas stream, particularly to a tail gas stream upstream the first pressure release means

In one embodiment according to the method of the disclosure, the method further comprises the steps of:
y) operating the water electrolyser, thereby producing oxygen-gas, particularly operating a high pressure water electrolyser, thereby producing pressurized oxygen gas; and
z) providing, from the oxygen produced by the water electrolyser in step y), at least part of the oxygen-rich gas, the second oxygen containing gas, the oxygen-rich bleaching gas, and the bleacher off gases.

In one embodiment according to the method of the disclosure, in step a), the pressurised air is supplied in the stream in direct fluid communication with the oxygen-rich gas.

In one aspect of the disclosure, the use of the production plant of the disclosure for performing the method of the disclosure, is disclosed.

In one aspect of the disclosure, a method for revamping an (existing) production plant for producing nitric acid, wherein the (existing) production plant comprises:
- an air compressor for providing a compressed air stream;
- a mixing apparatus, for mixing the compressed air stream with an ammonia gas stream, to produce an ammonia/oxygen-containing gas mixture;
- an ammonia converter operable at a pressure equal to or higher than P1 but lower than P2, for oxidising ammonia in the ammonia/oxygen-containing gas mixture, to produce a NOₓ gas/steam mixture, comprising water and nitric oxide;;
- a first gas cooler/condenser, downstream the ammonia converter, to produce an aqueous diluted nitric acid mixture, and a gaseous NOₓ stream;
- a NOₓ gas compressor for compressing the gaseous NOₓ stream, to produce a pressurized NOx gas stream at a pressure P2;
- an absorption tower for absorbing the NOₓ gases from the pressurized NOₓ gas stream in water, to produce a stream of raw nitric acid-containing residual NOₓ gas and a tail gas comprising NOₓ gases;
- a heat exchange system for exchanging heat between the NOₓ/gas steam mixture and the tail gas, particularly for heating a tail gas stream with the heat from the NOx gas/steam mixture from the ammonia converter;
- a second gas cooler/condenser for separating and condensing steam from the compressed NOₓ gas stream between the NOx compressor and the absorption tower, and
- a tail gas expander for expanding a stream of tail gas downstream the absorption tower, to produce an expanded tail gas at a pressure P1, wherein the tail gas expander can at least partly power the NOₓ gas compressor
into a production plant according to any one of claims 1 to 8, comprising the steps of:
- introducing a source of pressurised air in fluid communication with the production plant;
- introducing a supply or source of an oxygen-rich gas, such as a high pressure water electrolyser, providing part of a first oxygen-containing gas, upstream of and in fluid communication with the mixing apparatus;
- introducing a means for regulating the concentration of ammonia and/or oxygen in the ammonia converter, particularly a means for controlling the flow of the oxygen-rich gas or the flow of the first oxygen-containing gas and/or a means for controlling the flow of the ammonia gas stream, for maintaining the oxygen to ammonia molar ratio inside the ammonia converter at a ratio of at least 1.2 or at least 1.25, particularly between 1.2 and 9 or between 1.25 and 9;
- introducing a supply of a second oxygen-containing gas, having either (i) a pressure equal to or higher than P1 and upto P2 for supplying oxygen upstream the NOx gas compressor, or (ii) a pressure higher than P2, for supplying oxygen to the compressed NOx gas stream, such that a tail gas stream contains at least 0.5% by volume of oxygen;
- introducing means for splitting a stream of tail gas into a first tail gas stream and a second tail gas stream, wherein the first tail gas stream has a pressure equal to or higher than P1 and upto P2, and is in fluid communication with the oxygen-rich gas, which, upon mixing with the oxygen-rich gas provides the first oxygen-containing gas;
- particularly, introducing means for adjusting the amount of tail gas being split into the first tail gas stream and the second tail gas stream; and
- removing the air compressor.

### List of Figures

**Figure 1****:** Nitric acid plant according to the prior art.
**Figure 2A****:** An embodiment of a nitric acid plant according to the disclosure, wherein the second oxygen containing gas stream **68** has a pressure equal to or higher than P1 and lower than P2, and is provided upstream the NOx gas compressor.
**Figure 2B****:** An embodiment of a nitric acid plant according to the disclosure, comprising a low pressure bleacher, in particular with a pressure equal to or higher than P1 and up to P2, wherein the bleacher off-gases **77** are provided upstream the NOx gas compressor.
**Figure 2C****:** An embodiment of a nitric acid plant according to the disclosure, wherein the second oxygen containing gas stream **68** has a pressure equal to or higher than P2, and is provided downstream the NOx gas compressor, between the NOx gas compressor and the absorber.
**Figure 2D****:** An embodiment of a nitric acid plant according to the disclosure, comprising a high-pressure bleacher, in particular with a pressure equal to or higher than P2, wherein the bleacher off-gases **77** are provided downstream the NOx gas compressor, between the NOx gas compressor and the absorber.

**Table of numerals**

| | |
|---|---|
| **4** | air |
| **5** | tail gas |
| **6** | outlet of nitric acid absorption tower |
| **7** | a first pressure release means (tail gas expander) |
| **10** | first tail gas stream |
| **14** | ammonia/oxygen-containing gas mixture |
| **15** | low-pressure NOₓ gas/steam mixture |
| **17** | aqueous diluted nitric acid mixture |
| **22** | gaseous NOₓ stream |
| **24** | compressed NOₓ gas |
| **27** | stream of raw nitric acid-containing residual NOₓ gas |
| **32** | ammonia |
| **34** | compressed or pressurized air (prior art) |
| **35** | mixing apparatus |
| **36** | air compressor |
| **37** | ammonia converter operable at a pressure equal to or lower than P1 |
| **38** | gas cooler/condenser |
| **39** | additional gas cooler/condenser |
| **40** | NOx gas compressor, particularly for compressing a gas to a pressure P2 higher than P1 |
| **41** | absorption tower operable at a pressure P2 |
| **43** | heat exchange system |
| **50** | oxygen-rich gas |
| **51** | steam turbine |
| **55** | means for splitting the tail gas |
| **56** | first oxygen-containing gas |
| **60** | second pressure release means |
| **61** | pressurised oxygen-rich gas |
| **62** | bleacher |
| **63** | high-pressure water electrolyser |
| **64** | expanded tail gas |
| **65** | pressurised air (production plant according to the present disclosure) |
| **66** | first heat exchanger of the heat exchange system **43** |
| **67** | second heat exchanger of the heat exchange system **43** |
| **68** | second oxygen containing gas |
| **69** | second expanded tail gas |
| **70** | De-NOₓ treatment unit |
| **72** | oxygen-rich bleaching gas |
| **73** | outlet of the bleacher |
| **74** | stream of an oxygen-rich gas in direct fluid communication with a tail gas stream |
| **75** | bleached nitric acid |
| **77** | off gases from the outlet **73** of the bleacher **62** |
| **78** | means for pressurising |
| **79** | heat exchanger |
| **80** | second tail gas stream |
| **83, 84** | tail gas stream partly substituting a source of secondary air |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

As defined herein, an oxygen-rich gas is a gas comprising more than 21 vol% of oxygen, more in particular more than 30 vol%, more than 35 vol%, more than 40 vol%, more than 50 vol%, more than 60 vol%, more than 70 vol%, more than 80 vol%, more than 90 vol%, more than 95 vol%, more than 98 vol% and and more than 99 vol%, more in particular 100 vol% of oxygen. Such oxygen-rich gas can, for example, be provided by an air separation unit or a water electrolyser.

As defined herein, a pressurised oxygen-rich gas is a gas having a pressure ranging from 9 to 30 bara, preferably 15 to 30 bara, and comprising more than 21 vol% of oxygen, more in particular more than 30 vol%, more than 35 vol%, than 40 vol%, more than 50 vol%, more than 60 vol%, more than 70 vol%, more than 80 vol%, more than 90 vol%, more than 95 vol%, more than 98 vol%, and more than 99 vol%, more in particular 100 vol% of oxygen.

As defined herein, air is ambient air having atmospheric pressure.

As defined herein, steam are water vapours.

As defined herein, the term "flow" refers to either a volumetric flow or a mass flow.

The present disclosure generally relates to dual pressure methods and systems for producing nitric acid, which typically operates at two pressures, P1 and P2. Typically, P1 ranges from 2 to below 6 bara and P2 ranges from 6 to 16 bara.

The present disclosure generally relates to a dual pressure system and method for the production of nitric acid with important gains compared to conventional systems and methods, wherein the conventional primary air and/or secondary air consisting of pressurized air, provided by an air compressor with a typical capacity of at least 300000 m³/h, is replaced by the combination of (i) oxygen gas or an oxygen-rich gas, in particular a pressurized oxygen gas or oxygen-rich gas, such as produced by a high pressure water electrolyzer as further discussed herein; and (ii) a recirculated tail gas stream, thus removing the need for an air compressor to generate compressed primary and/or secondary air. Stated differently, in the system and methods for the production of nitric acid according to the present disclosure:
(i) oxygen gas or an oxygen-rich gas, in particular a pressurized oxygen gas or oxygen-rich gas, such as produced by a high-pressure water electrolyzer, is used (a) upon mixing with part of the tail gas stream, to provide a first oxygen-containing gas stream, which is mixed with an ammonia gas stream and subsequently provided to the ammonia converter; and (b) is used to provide a second oxygen-containing gas stream downstream of the ammonia converter, such as a second oxygen-containing gas stream which is mixed with a NOx containing gas stream downstream of the ammonia converter, such as between the ammonia converter and NOx compressor or between the NOx compressor and the absorber, and/or which is used as a stripping gas in a bleacher, wherein, in particular, the oxygen containing bleacher off-gases are subsequently mixed with a NOx containing gas stream between ammonia converter and absorber; and
(ii) the tail gas exiting the absorber is split in a first tail gas stream and a second tail gas stream, wherein the first tail gas stream is mixed with the oxygen gas or the oxygen-rich gas, in particular the pressurized oxygen or oxygen-rich gas, such as produced by a high pressure water electrolyzer, to provide the first oxygen-containing gas stream; and/or wherein part of the tail gas exiting the absorber may also be mixed with the oxygen gas or oxygen-rich gas, or the first oxygen containing gas, in particular the pressurized oxygen gas or oxygen-rich gas, such as produced by a high-pressure water electrolyzer, to provide the second oxygen containing gas stream.

### Nitric Acid Production Plant

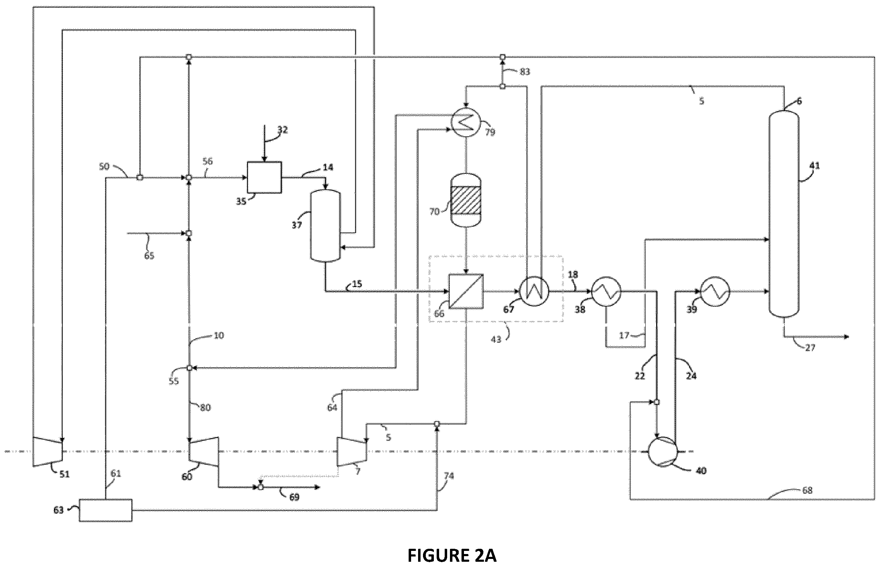

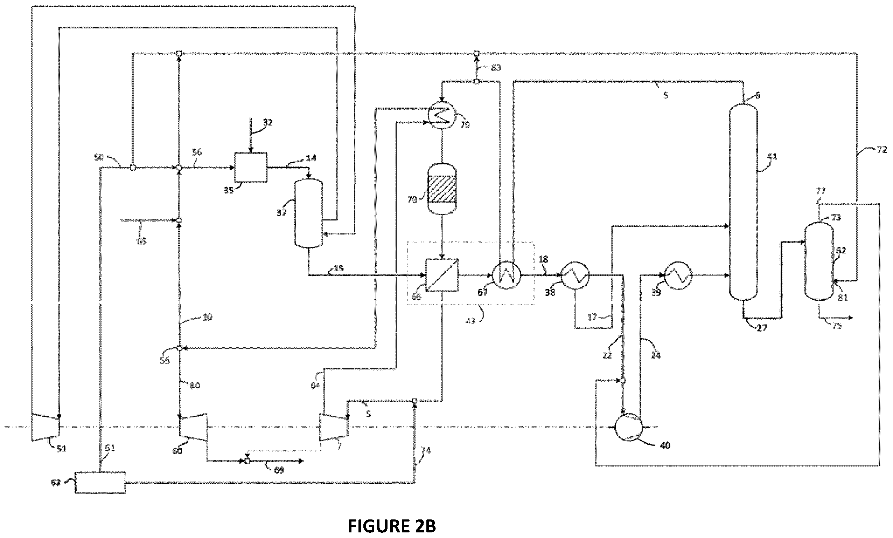

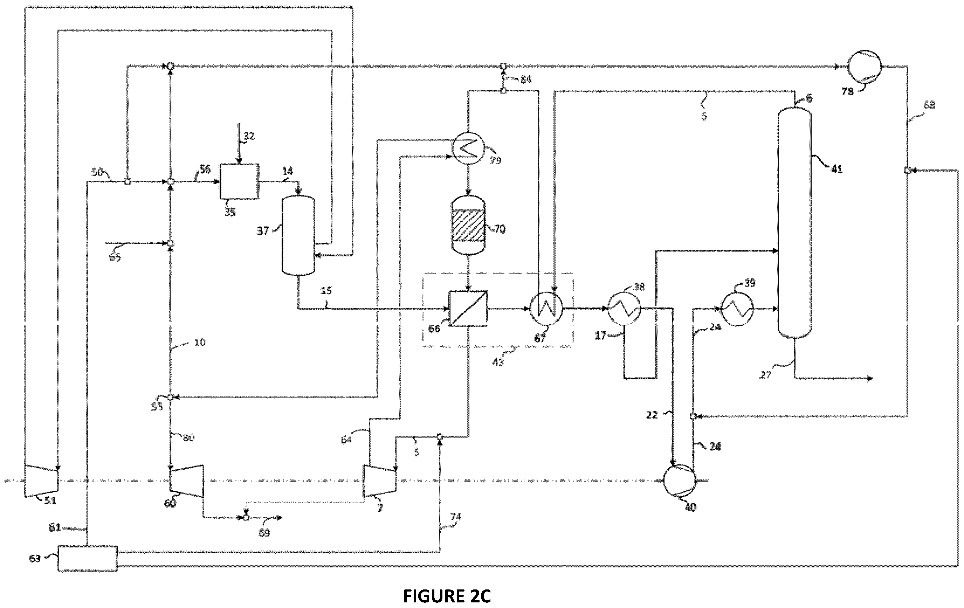

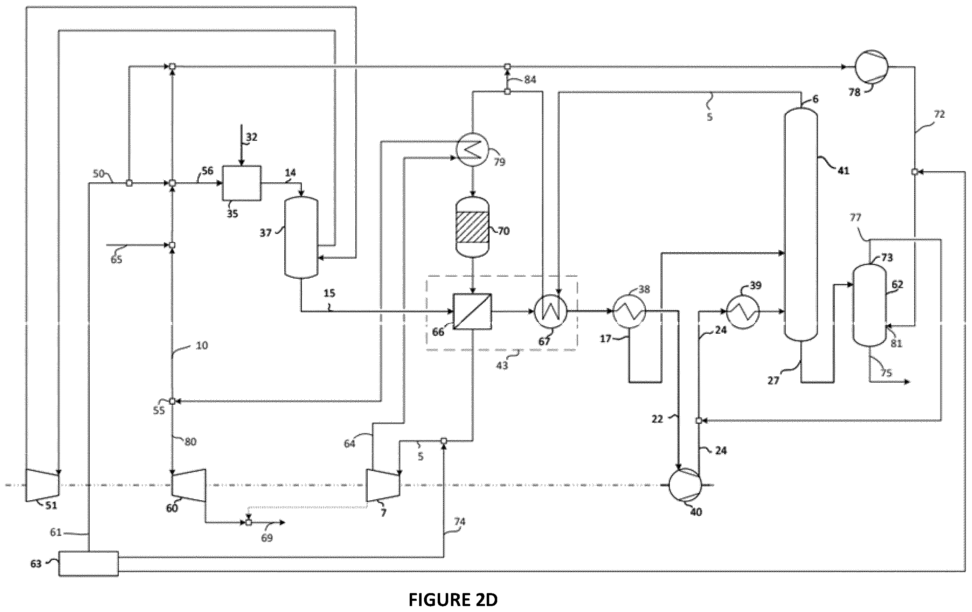

Reference is made to Figures 2A, 2B, 2C and 2D. In one aspect of the disclosure, a production plant for producing nitric acid at reduced power consumption and reduced emissions, is disclosed. The production plant comprises:
- preferably, a source of pressurised air **65,** particularly for pressurizing the production plant or system during start-up. More in particular, the source of pressurized air is in fluid communication with a system comprising a source or supply of an oxygen rich gas **50.** As defined herein, a source of pressurized air is capable of providing from 2000 to 19000 m³/h of pressurized air;
- a source or supply of an oxygen-rich gas **50,** which provides part of a first oxygen-containing gas;
- a mixing apparatus **35** downstream the source or supply of the oxygen-rich gas **50,** for mixing a first oxygen-containing gas **56** with an ammonia gas stream **32,** to produce an ammonia/oxygen-containing gas mixture **14;**
- an ammonia converter **37,** particularly operable at a pressure equal to or higher than P1 and lower than P2, more particularly operable at a pressure P1, for oxidising ammonia in the ammonia/oxygen-containing gas mixture **14,** to produce a NOₓ gas/steam mixture **15,** comprising water and nitric oxide;
- preferably, a means for measuring the oxygen concentration in the first oxygen-containing gas **56;** and preferably, a means for adjusting the supply of the ammonia gas stream **32** to the mixing apparatus **35;** and, preferably, a means for adjusting the concentration of oxygen in the oxygen-containing gas **56** such that the oxygen to ammonia molar ratio at the inlet of the ammonia converter **37** is at least 1.2 or at least 1.25, particularly between 1.2 and 9, or between 1.25 and 9. The system according to the present disclosure may thus comprise a means for regulating (not shown) the concentration of ammonia and/or oxygen in the ammonia converter **37,** particularly a means for controlling the flow of the oxygen-rich gas **50** and/or a means for controlling the flow of the ammonia gas stream **32,** for maintaining the oxygen to ammonia molar ratio inside the ammonia converter **37** at a ratio of at least 1.2 or at least 1.25; such as between 1.2 and 9, between 1.25 and 9 or between 1.3 and 9;
- preferably, a means for measuring the temperature in the ammonia converter **37;**
- a first gas cooler/condenser **38** downstream the ammonia converter **37,** to produce an aqueous diluted nitric acid mixture **17** and a gaseous NOₓ stream **22;**
- a NOₓ gas compressor **40** for compressing the gaseous NOₓ stream **22,** to produce a compressed NOₓ gas stream **24** at a pressure P2;
- an absorption tower **41** for absorbing the NOₓ gases from the compressed NOₓ gas stream **24** in water, to produce a stream of raw nitric acid-containing residual NOₓ gas **27** and a tail gas **5** comprising NOₓ gases, comprising an absorption tower tail gas outlet **6** for evacuating the tail gas **5;**
- preferably, a means for measuring the concentration of oxygen in a tail gas stream downstream the absorption tower **41;**
- a heat exchange system **43** located upstream the first gas cooler/condenser **38** for exchanging heat between the NOₓ gas/steam mixture **15** and the tail gas **5,** particularly for heating a tail gas stream with the heat from the NOx gas/steam mixture **15;**
- a second gas cooler/condenser **39** for separating and condensing steam from the compressed NOₓ gas stream **24,** particularly before said stream is provided to the absorption tower, particularly to produce a compressed NOₓ gas stream **24** having a temperature ranging from 20 to 60 °C;
- a supply of an oxygen-rich gas **68, 72, 77** having either (a) a pressure equal to or higher than P1 and up to P2 (see Figure 2A and 2B), for supplying oxygen downstream the ammonia converter **37** and upstream the NOₓ gas compressor **40,** or stated differently between the ammonia converter **37** and the NOx gas compressor **40,** or (b) a pressure higher than P2 (see Figure 2C and 2D), for supplying oxygen to the compressed NOₓ gas stream **24,** such that a tail gas stream **5, 10, 64, 69, 80, 83, 84** contains at least 0.5% by volume oxygen. In particular, the system may further comprise a means for controlling the flow of the second oxygen containing gas in order to obtain a tail gas stream **5, 10, 64, 69, 80, 83, 84** containing at least 0.5% by volume oxygen; and
- a first pressure release means, such as a tail gas expander **7,** located downstream the heat exchange system **43,** for expanding a stream of tail gas, i.e. downstream the absorption tower **41,** to produce a first expanded tail gas **64** at a pressure equal to or higher than P1 and lower than P2, particularly at a pressure P1, wherein the first pressure release means **7** can at least partly power the NOₓ gas compressor **40;**

The production plant is characterised in that the system further comprises a means for splitting **55** a stream of tail gas (downstream the absorption tower **41)** into a first tail gas stream **10** and a second tail gas stream **80,** wherein the first tail gas stream **10** has a pressure equal to or higher than P1 and up to P2 and is in fluid communication with the oxygen-rich gas **50,** and optionally the compressed air, wherein the mixing of the oxygen-rich gas **50** and the first tail gas stream **10** provides the first oxygen-containing gas **56.** In particular, the production plant may further comprise a means for adjusting the amount of tail gas being split into the first tail gas stream **10** and the second tail gas stream **80.**

Typically, the heat exchange system **43** comprises at least two heat exchangers **66, 67.** The person skilled in the art will realise that it is possible to split a tail gas stream inside the heat exchange system, for example between the heat exchanger **66** and **67.** In particular, the production plant may comprise further heat exchange systems, such that the gaseous NOₓ stream **22** or the NOₓ compressed gas stream **24** exchange heat with the tail gas **5.**

As defined herein, a stream of tail gas, or a tail gas stream, is any gas stream downstream the absorption tower **41,** between the absorption tower **41** and the point of communication between or the point of mixing of between the first tail gas stream **10** and the oxygen-rich gas **50.**

As defined herein, a means for splitting is any means suitable for splitting a tail gas stream, such as to generate a first tail gas stream **10** and a second tail gas stream **80.** In particular, the means for splitting is a T-connection having one inlet and two outlets, such that a gas flowing through the inlet of the T-connection is split into two gas streams of identical chemical composition. As defined herein, a pressure release means is any suitable means for reducing the pressure of a gas stream, such as a tail gas stream. In particular, the pressure release means may be a gas expander or a gas ejector. A gas ejector provides the benefits of a simplified equipment, wherein mixing of different gas streams is combined with the reduction of the tail gas pressure. For instance, a tail gas stream, processed via the gas ejector, may act as the motive gas, and a second gas fed to the ejector can, for example, be ambient air at a pressure (e.g. atmospheric pressure) lower than the tail gas stream as motive gas. In particular, a tail gas stream may be fed as the motive gas to a gas ejector, and a second gas fed to the ejector is oxygen gas at a pressure lower than the tail gas stream as motive gas. In this context, both the feeding of air or oxygen through the gas ejector contribute to increasing the concentration in the first tail gas stream **10** and/or a further tail gas stream **83, 84** being recycled, thereby reducing the demand on the oxygen-rich gas **50.** In particular, a tail gas stream is fed as the motive gas to the ejector and the second gas fed to the ejector is the NOx gas/steam mixture **15** or the gaseous NOx stream **22.**

The person skilled in the art will realise that the means for splitting can be incorporated within the (first) pressure release means, provided that the (first) pressure release means includes at least two outlets for the gas stream being depressurized, in particular one outlet for the first tail gas stream **10** and another outlet for the second tail gas stream **80.**

As defined herein, a means for adjusting the amount of tail gas being split into the first tail gas stream **10** and the second tail gas stream **80,** are any means for controlling the splitting in the means for splitting **55.** In particular, the means for splitting **55** is a T-connection as described above and the means for adjusting may be an orifice or a guide vane or a flow control valve at one or both of the outlets of the T-connection. Even more in particular, the means may be an integrated process control system, in which the temperature in the ammonia converter **37** is determined through a means for measuring the temperature. The temperature in the ammonia converter **37** is then used for controlling a flow control means in the means for splitting **55,** thereby controlling the splitting the tail gas stream, in order for the measured temperature to be maintained in the range 800-950 °C.

As defined herein, a means for adjusting the oxygen concentration is any suitable means for regulating the amount of oxygen to be introduced in the system from a measurement of the oxygen concentration, such as by using a means for measuring the concentration of oxygen. The oxygen concentration can be determined, for example, from a measurement in the gas phase using a process gas analyser. The oxygen concentration can also be determined from computing using the concentration of the oxygen source being introduced in the system, in particular the oxygen concentration of the oxygen rich gas, the flow at which the oxygen source, in particular the oxygen rich gas, is introduced in the system, particularly the flow at which the ammonia gas stream is introduced in the system and the relative flow values of the gases with which the oxygen source is mixed; in particular the relative flow values at which the oxygen rich gas and the ammonia gas stream are mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In this context, as defined herein, a means for regulating the concentration of ammonia and/or oxygen is any means suitable for achieving a target concentration of ammonia and/or oxygen. In particular, such means are gas flow control means, in particular a flow control valve or an orifice or a guiding vane, for controlling the flow of the oxygen rich gas and/or the ammonia gas stream. In particular, the means is an integrated process control system, in which the concentration of oxygen is measured, and the target flow or relevant flow of oxygen is thereby determined and achieved from controlling the flow of the first oxygen rich gas, from a gaseous source of oxygen at a pre-determined concentration.

The person skilled in the art will determine the optimal concentration of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will also weigh out the benefits of increasing the oxygen content in the absorption tower **41,** against the drawback of a higher gas volume downstream the absorption tower **41,** such implying equipment, such as heat exchangers, of a larger size, for heating tail gas.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature ranging as high as 1000 °C. More in particular, the means for measuring the temperature is an infrared thermometer for measuring and indicating a temperature ranging as high as 1000 °C.

As defined herein, means for converting steam into power are any means for achieving power from steam. In particular those means are a steam turbine connected to an electric generator.

Considering that a production cycle of a unit or plant comprises a start-up phase, wherein the different processes are initiated; a continuous and essentially constant phase or operation mode, wherein processes operate at a given working load that is usually kept constant during a production cycle; and a shutdown phase, where processes are slowly and safely stopped, the term "during operation" or "during continuous operation" of a unit or plant, in particular of a nitric acid plant, refers to the continuous operation mode wherein the unit or plant produces a product, in particular nitric acid.

The inventors have found that, instead of continuously supplying compressed air **34** provided by an air compressor **36** to the mixing unit **35,** in particular during continuous operation of the nitric acid plant, it is possible to recirculate the first tail gas stream **10** at a pressure P1. Therefore, pressurized air only has to be supplied in order to start the process, i.e. during the start-up phase of the nitric acid plant, in particular to pressurize the system, but no longer after the production of the tail gas **5** has started and an air compressor **36** is not required. The tail gas **5** has a pressure higher than P1 and, therefore, a first pressure release means, such as the tail gas expander **7,** can be used to provide reduce the pressure of the tail gas stream and provide a tail gas stream with pressure P1. In addition, the oxygen-rich gas **50** and the supply of a second oxygen-containing gas **68,** which typically have a pressure equal to or higher than P1 and up to P2 to provide oxygen to the ammonia converter **37** and to the absorption tower **41,** respectively, such that, in the absence of the primary and secondary air provided by the air compressor **36,** the concentration of oxygen in the ammonia converter **37** and in the absorption tower **41** is similar to and can be controlled to that in a standard dual pressure nitric acid plant.

In the absence of an air compressor **36** and with the tail gas stream **10** being recirculated in the system, not only is the power demand of the system reduced, but the NOₓ emissions leaving the system are also reduced. Therefore, the size of the treatment unit for treating those NOₓ emissions is reduced with respect to the size in the corresponding standard dual pressure nitric acid plant.

In one embodiment according to the production plant of the disclosure, the system further comprises one or more of:
- a steam turbine **51,** wherein the steam turbine can at least partly power the NOₓ gas compressor **40;**
- a heat exchanger **79** for exchanging heat between the first expanded tail gas **64** and a colder tail gas stream, particularly wherein the first expanded tail gas **64** exits the heat exchanger **79** at a temperature below 300°, and wherein the first expanded tail gas **64** downstream the heat exchanger **79** is in direct fluid communication with the means for splitting **55.** Stated differently, the expanded tail gas **64** exchanges heat with the tail gas **5** in the heat exchanger **79** and, particularly exits the heat exchanger **79** at a temperature below 300 °C, wherein the expanded tail gas **64** having exchanged heat with the tail gas **5** is the stream of tail gas splitted by the means for splitting **55** downstream the heat exchanger **79;**
- a De-NOₓ treatment unit **70,** particularly located in a tail gas stream downstream the absorption tower **41;** and
- a second pressure release means **60** for expanding the second tail gas stream **80** to atmospheric pressure, to produce a second expanded tail gas **69.** Said pressure release means **60** may be any means suitable for reducing the pressure of the second tail gas stream **80,** in particular by expanding the second tail gas stream **80.** Such means are for example, a pressure release valve or a gas expander.

Advantageously, the means for splitting **55** are located downstream the heat exchange system **43.** Indeed, both the first tail gas stream **10** and the second tail gas stream **80** are then at an optimal temperature. In particular, this means that the first stream of tail gas **10** is at a temperature below 300 °C, such that the first tail gas stream **10** can be fed to the ammonia converter **37** without the amount of ammonia fed through the stream **32,** having to be adjusted in order to maintain the temperature ranging from 800 to 950 °C in the ammonia converter **37,** the temperature at which the ammonia converter **37** is operable. In addition, the location of the means for splitting **55** at this location confers to the second tail gas stream **80** an optimal temperature for being expanded in the pressure release means **60,** in particular a tail gas expander, such as to provide an optimal of energy which can be used to power the NOx gas compressor **40.** Further, the presence of a steam turbine **51** allows for the recovery of the heat of the steam produced in the ammonia converter **37** and this recovered heat can be used, at least partly, for powering the tail NOₓ gas compressor **40.** Finally, the use of the steam turbine **51** contributes to operating the production plant in an energy-efficient manner.

In particular, the tail gas **5** is heated in a heat exchanger **67** of the heat exchange system 43 and then in the heat exchanger **79** from a temperature ranging from 20 to 250 °C, to a temperature ranging from 100 to 450 °C. Subsequently, the tail gas exiting the heat exchanger **79** is heated in the heat exchange system **43** to a temperature ranging from 200 to 550 °C. The tail gas exiting the heat exchanger **79** then is at an optimal temperature for being treated in the De-NOₓ treatment unit **70** and, therefore, the De-NOₓ treatment unit **70** is located between the heat exchanger **79** and the heat exchange system **43.** The person skilled in the art will, without any difficulty, select the proper location for the De-NOₓ treatment unit **70** such that the operating temperature of the De-NOₓ treatment unit **70** is in agreement with the temperature of the corresponding stream of tail gas.

In one embodiment according to the production plant of the disclosure, the system further comprises a bleacher **62** for bleaching the stream of raw nitric acid-containing residual NOₓ gas **27,** to provide a stream of bleached nitric acid **75,** wherein the bleacher has an inlet **81** for an oxygen-rich bleaching gas **72,** in particular wherein the inlet **81** is in fluid communication with a high-pressure water electrolyser **63,** and an outlet **73** for the bleacher's off-gases **77.** It is understood that the bleacher **62** further comprises an inlet for the stream of raw nitric acid containing residual NOx gas and an outlet for bleached nitric acid. The bleaching gases or off-gases **77** are in fluid communication with any gas stream downstream the ammonia converter **37** and upstream the NOₓ gas compressor **40** if the bleacher **62** operates at a pressure higher than P1 and up to equal to P2 (Figure 2B), or in fluid communication with any stream downstream the NOₓ gas compressor **40** if the bleacher **62** operates at a pressure equal to or higher than P2 (Figure 2D), such that the supply for or source of the second oxygen-containing gas **68, 72, 77** comes at least partly from the off-gases **77.**

When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching gases or off-gases **77** correspond to the second oxygen containing gas (or the oxygen-rich gas supplied by the supply **68)** having a pressure higher than P1 and up to P2 (Figure 2B) or having a pressure higher than P2 (Figure 2D): the supply of the oxygen-rich gas having pressure higher than P1 and up to P2 (Figure 2B) or higher than P2 (Figure 2D), in particular the second oxygen-containing gas, is achieved through the bleacher **62,** as the bleacher off-gases **77,** and no separate source of oxygen is required.

In one embodiment according to the production plant of the disclosure, part of the oxygen-rich gas **50** or part of the first oxygen-containing gas **56** or part of the tail gas **5,** such as part of a tail gas stream **83, 84,** is in fluid communication with the inlet **81** of the bleacher **62,** such that the oxygen rich-bleaching gas or stripping gas **72** is at least partly provided by part of the oxygen-rich gas **50** or part of the oxygen-containing gas **56** or part of the tail gas **5,** such as part of a tail gas stream **83, 84.**

If a bleacher **62** is present, as no secondary air is fed by an air compressor (**36** in the standard nitric acid plant) to the bleacher **62,** the bleacher **62** can be conveniently fed by the oxygen-rich gas **50.** Also, once tail gas **5** is produced and recirculated, the first oxygen-containing gas **56** or part of a tail gas stream can be fed to the bleacher **62:** the concentration of NOₓ gases in the oxygen-containing gas **56** or the tail gas **5** is sufficiently low that the bleaching in the bleacher **62** remains sufficiently efficient.

In particular, the system further comprises means for pressurising **78** the oxygen-rich gas **50** or the first oxygen-containing gas **56** or the tail gas **5,** when used as a stripping gas in the bleacher, to a pressure equal to or higher than P2, such that the bleacher **62** is a high-pressure bleacher, that is a bleacher operating at a pressure ranging from above 6 bara and up to 16 bara (Figure 2D). Those means for pressurising **78** can, for example, be a gas compressor.

In one embodiment according to the production plant of the disclosure, the system further comprises a stream of a second oxygen-rich gas **74** in direct fluid communication with any tail gas stream downstream the absorption tower **41.** More in particular, the system further comprises a stream of a pressurized oxygen-rich gas in direct fluid communication with any tail gas stream upstream the first pressure release means **7.**

The feeding of a stream of a second oxygen-rich gas **74** allows to reduce the amount of the first oxygen-rich gas **50** having to be provided to the mixing unit **35.** In particular, the stream of the second oxygen-rich gas **74** can be fed downstream the heat exchange **43** and upstream the first pressure release means **7,** which allows more power to be exported from the first pressure release means, e.g. from the tail gas expander **7.**

In one embodiment according to the production plant of the disclosure, the first oxygen-rich gas **50,** the second oxygen containing gas **68, 72, 77,** the stream of the second oxygen-rich gas **74,** which is particularly in fluid communication with any stream of tail gas downstream the absorption tower **41,** and the oxygen-rich bleaching gas **72** and the off-gases **77** are all provided at least partly by a water electrolyser **63,** in particular a high-pressure water electrolyser **63.**

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

2 OH- = H₂O + ½ O₂ + 2e-;

a cathode, producing hydrogen gas according to the reaction

2 H₂O + 2 e- = H₂ + 2 OH- ;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. The electrolyser may be operated at a temperature of 50 to 80 °C, or 60 to 80 °C, and a gas pressure of 2 bara, preferably 9 to 30 bara - as a high pressure water electrolyser, even more preferably 15 to 30 bara.

A high-pressure water electrolyser hence results in the production of pressurised hydrogen at the cathode and pressurised oxygen at the anode, such as having a pressure of 9 to 30 bara, even more preferably a pressure of 15 to 30 bara. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

Conveniently, the water electrolyser **63** provides oxygen to all the various points where oxygen needs to be fed. In particular, the supply of oxygen from the electrolyser **63,** is sufficient to provide all of the oxygen of the first oxygen-rich gas, the second oxygen-rich gas **74,** the second oxygen-containing gas **68,** the oxygen-rich bleaching gas **72,** and the off-gases **77.** In this manner, the system is simplified and comprises a single source of oxygen from which different oxygen-containing gas streams can be produced. In particular, oxygen-containing gas streams can be produced at the desired pressure, using standard pressure adjustment means. The use of a high-pressure electrolyser operable at 9 to 30 bara is particularly useful as a source of oxygen gas to be supplied to a bleacher operating at a pressure higher than P2.

Another advantage of the presence of a high-pressure water electrolyser lies in the potential to, in parallel to producing oxygen gas that can be used in the nitric acid production, also produce hydrogen gas. Such hydrogen gas is produced in a green manner, i.e. without the conventional use of natural gas, which results in the production of the greenhouse gas carbon dioxide. The hydrogen gas can then be used in the production of ammonia in an Haber-Bosch process, also conventionally named synthesis gas unit. The high pressure water electrolyser thus enables the integration of the ammonia and nitric acid production processes.

In one embodiment according to the production plant of the disclosure, the fluid communication between the source of pressurised air **65,** for pressurizing the system during the startup phase, and the system is in direct fluid communication with the first oxygen-rich gas **50,** particularly having a pressure P1.

It is preferred to introduce pressurised air **65** at the start-up in the tail gas stream in direct fluid communication with the oxygen-rich gas **50.** In this manner, upon operating the NOx compressor **40** during the start-up of the system, it is ensured that air flows through the converter **37** when ammonia **32** is being fed to converter **37,** such that there is a sufficient concentration of oxygen to convert ammonia into nitric oxide. Subsequently, the nitric acid process being induced, the tail gas **5** is produced and the first tail gas stream **10** can be recirculated to the mixing unit **35,** upon feeding the oxygen-rich gas **50.**

### Method For Producing Nitric Acid

Reference is made to Figures 2A, 2B, 2C and 2D. In one aspect of the disclosure, a method for producing nitric acid at reduced power consumption and reduced emissions, in a production plant according to the production plant of the disclosure, is disclosed. The method comprises the steps of
a) preferably, pressurizing the system by supplying the pressurised air **65** in the system;
b) preferably, operating the NOₓ gas compressor **40** or the first pressure release means (e.g. tail gas expander) **7** using external power, thereby inducing a pressurised air flow in the system and further pressurizing the system to a pressure P2 downstream the NOₓ gas compressor **40;**
c) supplying the ammonia gas stream **32** and a first oxygen containing gas to the mixing apparatus **35,** thereby producing the ammonia/oxygen-containing gas mixture **14;**
d) oxidising ammonia in the ammonia/oxygen-containing gas mixture **14** in the ammonia converter **37,** at a pressure equal to or higher than P1 and lower than P2, in particular at a pressure P1, particularly at a temperature ranging from 800 to 950 °C, thereby producing the gaseous NOₓ gas/steam mixture **15,** comprising water and nitric oxide;
e) cooling the NOx gas in the gaseous NOx gas/steam mixture **15** in the heat exchange system **43** and in the first gas/cooler condenser **38,** thereby producing an aqueous diluted nitric acid mixture **17** and a gaseous NOx stream **22;**
f) compressing the gaseous NOx stream **22** in the NOx gas compressor **40,** thereby providing the pressurized NOₓ compressed gas stream **24** having a pressure P2;
g) absorbing the compressed gaseous NOₓ stream **24** in the absorption tower **41,** thereby providing the stream of raw nitric acid-containing residual NOₓ gas **27** and the tail gas **5** comprising NOₓ gases;
h) heating the tail gas **5** in the heat exchange system **43,** with the heat from the NOₓ gas/steam mixture **15** coming from the ammonia converter **37,** particularly to a temperature ranging from 150 to 650 °C;
i) cooling the compressed NOₓ gas stream **24** in a second gas cooler/condenser **39,** thereby providing a compressed NOₓ gas stream **24,** particularly having a temperature ranging from 20 to 60 °C; and
j) expanding at least part the tail gas **5** obtained in step h) in a first pressure release means (e.g. a tail gas expander **7**), thereby providing the first expanded tail gas **64.**

The method is characterised in that it further comprises the steps of
k) in particular, splitting a tail gas stream with a first means for splitting **55** into a first tail gas stream **10** and a second tail gas stream **80,** and mixing the first tail gas stream **10** with the (first) oxygen-rich gas **50,** thereby providing the first oxygen-containing gas **56;**
l) optionally, measuring the oxygen concentration in the first oxygen-containing gas **56;**
m) adjusting the flow of the first oxygen-rich gas **50** (e.g. having a pressure P2) being mixed in step k), or the flow of the ammonia gas, such that the oxygen to ammonia molar ratio at the inlet of the ammonia converter **37** is at least 1.2 or 1.25, such as between 1.2 and 9, between 1.25 and 9 or between 1.3 and 9; or stated differently, such as to maintain the oxygen to ammonia molar ratio inside the ammonia converter **37** at a ratio of at least 1.2 or 1.25, such as ranging from 1.2 to 9, from 1.25 to 9 or from 1.3 to 9, particularly if the oxygen concentration measured in step I) is such that the oxygen to ammonia molar ratio in the ammonia converter **37** is less than 1.2 or 1.25;
n) optionally, measuring the temperature in the ammonia converter **37;**
o) optionally, adjusting the gas volume being mixed in step k) or the ammonia gas stream **32** supplied in step d), if the temperature measured in step n) is outside the range of 800-950 °C, such that the temperature in the ammonia converter is maintained in the range of 800-950 °C;
p) optionally, measuring the oxygen concentration in the tail gas **5** downstream the absorption tower **41;**
q) adjusting the flow or supply of the second oxygen-containing gas **68, 72, 77,** particularly at a pressure equal to or higher than P1 and up to P2 upstream the NOₓ gas compressor **40,** or at a pressure higher than P2 downstream the NOₓ gas compressor **40,** such that the oxygen concentration in a tail gas stream **5, 10, 64, 69, 80, 83,** 84 contains at least 0.5% by volume oxygen, particularly if the oxygen concentration measured in step p) is less 0.5% by volume oxygen.
r) in particular, repeating steps c) to q).

Typically, P1 ranges from 2 to 6 bara and P2 ranges from 9 to 16 bara. The person skilled in the art will determine the optimal concentration of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will also weigh out the benefits of increasing the oxygen content in the absorption tower **41,** such as a reduced tower size due to improved absorption, against the drawback of a higher gas volume downstream the absorption tower **41,** which requires equipment, such as heat exchangers, of a larger size, for heating tail gas.

In particular, the gaseous NOₓ stream **22** or the NOₓ compressed gas stream **24** exchange heat with the tail gas **5.** In particular, the gaseous NOₓ stream **22** or the NOₓ compressed gas stream **24** exchange heat with the tail gas **5.**

The inventors have found that, instead of continuously supplying compressed air **34** provided by an air compressor **36** to the mixing unit **35,** it is possible to recirculate the first tail gas stream **10** at a pressure P1, in particular during continuous operation of the nitric acid plant. Therefore, compressed or pressurized air only has to be supplied in order to start the process, i.e. during the start-up phase of the nitric acid plant, for pressurizing the system, but no longer after the production of the tail gas **5** has started, during the continuous operation phase or mode of the nitric acid plant, and an air compressor **36** is not required. The tail gas **5** has a pressure higher than P1 and, therefore, a first pressure release means **7,** such as a tail gas expander, can be used to provide a stream of tail gas of pressure P1. In addition, the first oxygen-rich gas **50** and the second oxygen-containing gas **68,** having either a pressure equal to or higher than P1 and up to P2, provide oxygen to the ammonia converter **37** and to the absorption tower **41,** respectively, such that, in the absence of the primary and secondary air provided by the air compressor **36,** the concentration of oxygen in the ammonia converter **37** and in the absorption tower **41** is similar to that in a standard dual pressure nitric acid plant.

In the absence of an air compressor **36** and with the first tail gas stream **10** being recirculated in the system, not only is the power demand of the system reduced: the NOₓ emissions leaving the system are also reduced. Therefore, the size of the treatment unit for treating those NOₓ emissions is reduced with respect to the size in the corresponding standard dual pressure nitric acid plant.

In one embodiment according to the method of the disclosure, the first tail gas stream **10** mixed in step k) is obtained after step j), in particular the first expanded tail gas 64 is splitted in step k), and the method further comprises the steps of
s) particularly before step k), heating up, in the heat exchanger **79,** a tail gas stream which is colder than the first expanded tail gas **64** with the first expanded tail gas **64,** thereby bringing the expanded tail gas to be mixed in step k to a temperature below 300°; in particular before step k), heating up, in the heat exchanger, the tail gas **5** obtained in step g) with the first expanded tail gas obtained in step j), thereby bringing the tail gas to be mixed in step k) to a temperature below 300 °C;
t) treating a tail gas stream, particularly the tail gas stream obtained from/heated in step s) in the De-NOₓ treatment unit **70;**
u) expanding the second tail gas stream **80** in the second pressure release means **60,** thereby providing the second expanded tail gas **69.** The second pressure release means **60** may be any means suitable for reducing the pressure of a gas stream, hence expanding a gas stream, in particular the second tail gas stream **80.** Such means are for example, a pressure release valve or a gas expander; and
v) recovering at least part of the steam generated in the ammonia converter **37** in the steam turbine **51.**

Advantageously, the means for splitting **55** are located downstream the heat exchange system **43.** Indeed, both the first tail gas stream **10** and the second tail gas stream **80** are then at an optimal temperature. This means that the first stream of tail gas **10** is at a temperature below 300 °C, such that the first tail gas stream **10** can be fed to the ammonia converter **37** without the amount of ammonia fed through the stream **32,** having to be adjusted in order to maintain the temperature in the ammonia converter, ranging from 800 to 950 °C, the temperature at which the ammonia converter **37** is operable. In addition, the location of the means for splitting **55** at this location confers to the second tail gas stream **80** an optimal temperature for being expanded in the pressure release means **60** such as to provide an optimal of energy which can be used to power the NOx gas compressor **40.** Further, the presence of a steam turbine **51** allows for the recovery of the heat of the steam produced in the ammonia converter **37** and this recovered heat can be used, at least partly, for powering the tail NOₓ gas compressor **40.** Finally, the use of the steam turbine **51** contributes to operating the production plant in an energy-efficient manner.

In particular, the tail gas **5** is heated in the heat exchanger **79,** in particular in a heat exchanger **67** of the heat exchange system **43** and then in the heat exchanger **79,** from a temperature ranging from 20 to 250 °C, to a temperature ranging from 100 to 450 °C. Subsequently, the tail gas exiting the heat exchanger **79** is heated in the heat exchange system **43,** particularly in a heat exchanger **66** of the heat exchange system **43,** to a temperature ranging from 200 to 550 °C. The tail gas exiting the heat exchanger **79** then is at an optimal temperature for being treated in the De-NOₓ treatment unit **70** and, therefore, the De-NOₓ treatment unit **70** is located between the heat exchanger **79** and the heat exchange system **43.** The person skilled in the art will, without any difficulty, select the proper location for the De-NOₓ treatment unit **70** such that the operating temperature of the De-NOₓ treatment unit **70** is in agreement with the temperature of the corresponding stream of tail gas.

In one embodiment according to the method of the disclosure, the method further comprises the step of w) bleaching the stream of raw nitric acid-containing residual NOₓ gas **27** in the bleacher **62,** thereby producing the stream of bleached nitric acid **75.**

When the stream of raw nitric acid containing residual NOx gas is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching gases or off-gases **77** correspond to the second oxygen-containing gas supplied by the corresponding supply or source **68** for an oxygen-rich gas having a pressure higher than P1 and up to P2 (Figure 2B) or higher than P2 (Figure 2D): the supply of the second oxygen-containing gas having pressure higher than P1 and up to P2 (Figure 2B) or higher than P2 (Figure 2D) is the bleacher **62,** in particular the bleacher off-gases **77,** and no separate source of oxygen is required.

In one embodiment according to the method of the disclosure, the method further comprises the step of w1) supplying part of the first oxygen-rich **50** or part of the first oxygen-containing gas **56** obtained in step k) or part of the tail gas stream **5, 83, 84,** such as obtained in step g), to the bleacher **62** in step w).

If a bleacher **62** is present, i.e. if such a bleaching step is performed, as no secondary air is fed by an air compressor (**36** in the standard nitric acid plant) to the bleacher **62,** the bleacher **62** can be conveniently fed by the first oxygen-rich gas **50.** Also, once tail gas **5** is produced and recirculated, the first oxygen-containing gas **56** or part of the tail gas stream can be fed to the bleacher **62:** the concentration of NOₓ gases in the first oxygen-containing gas **56** or the tail gas **5** is sufficiently low that the bleaching in the bleacher **62** remains sufficiently efficient.

In particular, the system further comprises the step of w2) pressurising the first oxygen-rich gas **50,** part of a tail gas stream, and/or the first oxygen-containing gas **56** to be supplied to the bleacher in the means for pressurising **78,** to a pressure higher than P2, such that the bleacher **62** is a high-pressure bleacher, that is a bleacher operating at a pressure ranging from above 6 or 9 bara and up to 16 bara (Figure 2D). Those means for pressurising **78** can, for example, be a gas compressor.

In one embodiment according to the method of the disclosure, the method further comprises the step of x) supplying a stream of a second oxygen-rich or oxygen-containing gas **68, 72, 77,** particularly as a stream of a pressurized oxygen-rich gas, to a tail gas stream, particularly to a tail gas stream upstream the first pressure release means **7.** The feeding of a stream of a second oxygen-rich gas **74** allows to reduce the amount of the first oxygen-rich gas **50** having to be provided to the mixing unit **35.** In particular, the stream of a second oxygen-rich gas **74** can be fed downstream the heat exchanger **43** and upstream the first pressure release means **7,** such as a tail gas expander, which allows more power to be exported from the first pressure release means **7,** such as a tail gas expander.

In one embodiment according to the method of the disclosure, the method further comprises the steps of
y) operating the water electrolyser **63,** thereby producing oxygen-gas, particularly operating a high-pressure water electrolyzer, thereby producing pressurized oxygen gas; and
z) providing, from the oxygen produced by the water electrolyser **63** in step y), at least part of the (first) oxygen-rich gas **50,** the second oxygen containing gas **68, 72, 77,** the second oxygen-rich gas **74** (particularly in fluid communication with any stream of tail gas downstream the absorption tower **41**), and the oxygen-rich bleaching gas **72** and the off-gases **77.**

Conveniently, the water electrolyser **63** provides oxygen to all the various points where oxygen needs to be fed. In particular, the supply of oxygen from the electrolyzer **63** is sufficient to provide all of the oxygen of the first oxygen-rich gas **50,** the second oxygen-rich gas **74,** the second oxygen containing gas **68,** the oxygen-rich bleaching gas **72** and the off-gases **77.** In this manner, the system is simplified and can comprise a single source of oxygen from which different oxygen-containing gas streams can be produced. In particular, different oxygen containing streams can be produced at the desired pressures, using standard pressure adjustment means. The use of a high-pressure electrolyser operable at a pressure of 9 to 30 bara, preferably at a pressure of 15 to 30 bara, is particularly useful as a source of oxygen gas that can be supplied to a bleacher operating at a pressure higher than P2.

Another advantage of the presence of a high-pressure water electrolyser lies in the potential to, in parallel to producing oxygen gas that can be used in nitric acid production, also produce hydrogen gas. Such hydrogen gas is produced in a green manner, i.e. without the conventional use of natural gas, which results in the production of the greenhouse gas carbon dioxide. The hydrogen gas can then be used in the production of ammonia in an Haber-Bosch process, also conventionally named synthesis gas unit. The high pressure water electrolyser thus enables the integration of the ammonia and nitric acid production processes. Furthermore, as pressurizing water requires less energy than pressurizing a gas, the use of a high-pressure water electrolyzer results in the production of pressurized oxygen-rich gas at minimized power consumption.

In one embodiment according to the method of the disclosure, in step a), the pressurised air **65,** particularly having a pressure P1, is supplied in the stream in direct fluid communication with the oxygen-rich gas **50,** particularly having a pressure P2.

It is preferred to introduce pressurised air **65** at the start-up in the tail gas stream in direct fluid communication with the oxygen-rich gas **50.** In this manner, upon operating the means for pressurising and the NOx compressor during the start-up of the system, it is ensured that air flows through the converter **37** when ammonia **32** is being fed to converter **37,** such that there is a sufficient concentration of oxygen to convert ammonia into nitric oxide. Subsequently, the nitric acid process being induced, the tail gas **5** is produced and the first tail gas stream **10** and recirculated to the mixing unit **35,** and mixed with the first oxygen-rich gas **50.**

### Use Of the Production Plant Of The Disclosure

In one aspect of the disclosure, the use of the production plant of the disclosure for performing the method of the disclosure, is disclosed.

### Method For Revamping A Nitric Acid Production Plant

In one aspect of the disclosure, a method for revamping a production plant for producing nitric acid, in particular for revamping an existing production plant into a production plant according to the present disclosure is disclosed, wherein the existing system or production plant for producing nitric acid comprises:
- an air compressor **36** for providing a compressed air stream **34;**
- a mixing apparatus **35,** for mixing the compressed air stream **34** with an ammonia gas stream **32,** to produce an ammonia/oxygen-containing gas mixture **14;**
- preferably, means for adjusting the supply of the ammonia gas stream **32** to the mixing apparatus **35;**
- an ammonia converter **37,** particularly operable at a pressure equal to or higher than P1 but lower than P2, particularly operable at a pressure P1, for oxidising ammonia in the ammonia/oxygen-containing gas mixture **14,** to produce a NOₓ gas/steam mixture **15,** comprising water and nitric oxide;
- preferably, means for measuring the temperature in the ammonia converter **37;**
- a first gas cooler/condenser **38,** downstream the ammonia converter **37,** to produce an aqueous diluted nitric acid mixture **17** and a gaseous NOx stream **22;**
- a NOₓ gas compressor **40** for compressing the gaseous NOx stream **22,** to produce a compressed or pressurized NOx gas stream **24** at a pressure P2;
- an absorption tower **41** for absorbing the NOₓ gases from the compressed NOₓ gas stream **24** in water, to produce a stream of raw nitric acid-containing residual NOₓ gas **27** and a tail gas **5** comprising NOₓ gases, comprising an absorption tower tail gas outlet **6** for evacuating the tail gas **5;**
- preferably, means for measuring the concentration of oxygen in the tail gas **5** in a tail gas stream downstream the absorption tower **41;**
- a heat exchange system **43** for exchanging heat between the NOx gas/steam mixture **15** and the tail gas **5;** particularly for heating a tail gas stream with the heat from the NOx gas/steam mixture from the ammonia converter;
- a second gas cooler/condenser **39** for separating and condensing steam from the compressed NOₓ gas stream **24** located between the NOx compressor and the absorption tower, particularly to produce a compressed NOₓ gas stream **24** having a temperature ranging from 20 to 60 °C; and
- a first pressure release means or tail gas expander **7** located downstream the heat exchange system **43,** for expanding a stream of tail gas downstream the absorption tower **41,** to produce a first expanded tail gas **64,** wherein the first pressure release means or tail gas expander **7** can at least partly power the NOₓ gas compressor **40.**

The revamping method comprises the steps of
- preferably, introducing a source of pressurised air **65** in fluid communication with the production plant, suitable for pressurizing the production plant during startup, in particular wherein the source of pressurized air is capable of providing from 2000 to 19000 m³/h of pressurized air;
- introducing a supply or source of an oxygen-rich gas **50,** such as a high-pressure water electrolyzer, providing part of a first oxygen containing gas, upstream of and in fluid communication with the mixing apparatus **35;**
- preferably, introducing means for measuring the oxygen concentration in the oxygen-containing gas **56;**
- preferably, introducing means for adjusting the concentration of oxygen in the oxygen-containing gas **56** such that the oxygen to ammonia molar ratio at the inlet of the ammonia converter **37** is at least 1.2 or 1.25, particularly between 1.2 and 9 or between 1.25 and 9. More in particular, there may be introduced a means for regulating the concentration of ammonia and/or oxygen in the ammonia converter, particularly a means for controlling the flow of the oxygen-rich gas or the flow of the first oxygen-containing gas and/or a means for controlling the flow of the ammonia gas stream, for maintaining the oxygen to ammonia molar ratio inside the ammonia converter at a ratio of at least 1.2 or 1.25, particularly between 1.2 and 9, between 1.25 and 9 or between 1.3 and 9;
- in particular, introducing a supply of a second oxygen-containing gas **68, 72, 77,** having either (i) a pressure equal to or higher than P1 and upto P2 for supplying oxygen upstream the NOx gas compressor, or (ii) a pressure higher than P2, for supplying oxygen to the compressed NOx gas stream, such that a tail gas stream **5, 10, 62, 69, 80, 83, 84** contains at least 0.5% by volume of oxygen;
- introducing a means for splitting **55** a stream of tail gas downstream the absorption tower **41** into a first tail gas stream **10** and a second tail gas stream **80,** wherein the first tail gas stream is in fluid communication with the first oxygen-rich gas **50,** wherein the mixing of the first tail gas stream and the first oxygen rich gas provides the first oxygen-containing gas;
- particularly introducing a means for adjusting the amount of tail gas being splitted into the first tail gas stream **10** and the second tail gas stream **80;** and
- removing the air compressor **36.**

The term "oxygen-rich gas" is used as defined elsewhere herein.

Typically, the heat exchange system **43** comprises at least two heat exchangers **66, 67.** The person skilled in the art will realise that it is possible to split a stream of tail gas inside the heat exchange system, for example between the heat exchanger **66** and **67.** In particular, the production plant both prior to and after revamping comprises further heat exchange systems, such that the gaseous NOₓ stream **22** or the NOₓ compressed gas stream **24** exchange heat with the tail gas **5.**

As defined herein, a stream of tail gas/a tail gas stream is any gas stream downstream the absorption tower, such as located between the absorption tower **41** and the point of communication between or mixing of the first tail gas stream **10** and the (first) oxygen-rich gas **50.**

As defined herein, a means for splitting is any means suitable for splitting a tail gas stream, such as to generatea first tail gas stream **10** and a second tail gas stream **80.** In particular, the means for splitting is a T-connection having one inlet and two outlets, such that a gas flowing through the inlet of the T-connection is split into two gas streams of identical chemical composition. As defined herein, a pressure release means is any suitable means for reducing the pressure of a gas stream, such as a tail gas stream. In particular, the pressure release means may be a gas expander or a gas ejector. A gas ejector provides the benefits of a simplified equipment, wherein mixing of different gas streams is combined with the reduction of the tail gas pressure. For instance, a tail gas stream, processed via the gas ejector, may act as the motive gas, and a second gas fed to the ejector can, for example, be ambient air at a pressure (e.g. atmospheric pressure) lower than the tail gas stream as motive gas. In particular, a tail gas stream may be fed as the motive gas to a gas ejector, and a second gas fed to the ejector is oxygen gas at a pressure lower than the tail gas stream as motive gas. In this context, both the feeding of air or oxygen through the gas ejector contribute to increasing the concentration in the first tail gas stream **10** and/or a further tail gas stream **83, 84** being recycled, thereby reducing the demand on the oxygen-rich gas **50.** In particular, a tail gas stream is fed as the motive gas to the ejector and the second gas fed to the ejector is the NOx gas/steam mixture **15** or the gaseous NOx stream **22.**

The person skilled in the art will realise that the means for splitting can be incorporated within the (first) pressure release means, provided that the (first) pressure release means includes at least two outlets for the gas stream being depressurized, in particular one outlet for the first tail gas stream **10** and another outlet for the second tail gas stream **80.**

As defined herein, a means for adjusting the amount of tail gas being split into the first tail gas stream **10** and the second tail gas stream **80,** are any means for controlling the splitting in the means for splitting **55.** In particular, the means for splitting **55** is a T-connection as described above and the means for adjusting may be an orifice or a guide vane or a flow control valve at one or both of the outlets of the T-connection. Even more in particular, the means may be an integrated process control system, in which the temperature in the ammonia converter **37** is determined through a means for measuring the temperature. The temperature in the ammonia converter **37** is then used for controlling a flow control means in the means for splitting **55,** thereby controlling the splitting the tail gas stream, in order for the measured temperature to be maintained in the range 800-950 °C.

As defined herein, a means for adjusting the oxygen concentration is any suitable means for regulating the amount of oxygen to be introduced in the system from a measurement of the oxygen concentration, such as by using a means for measuring the concentration of oxygen. The oxygen concentration can be determined, for example, from a measurement in the gas phase using a process gas analyser. The oxygen concentration can also be determined from computing using the concentration of the oxygen source being introduced in the system, in particular the oxygen concentration of the oxygen rich gas, the flow at which the oxygen source, in particular the oxygen rich gas, is introduced in the system, particularly the flow at which the ammonia gas stream is introduced in the system and the relative flow values of the gases with which the oxygen source is mixed; in particular the relative flow values at which the oxygen rich gas and the ammonia gas stream are mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In this context, as defined herein, a means for regulating the concentration of ammonia and/or oxygen is any means suitable for achieving a target concentration of ammonia and/or oxygen. In particular, such means are gas flow control means, in particular a flow control valve or an orifice or a guiding vane, for controlling the flow of the oxygen rich gas and/or the ammonia gas stream. In particular, the means is an integrated process control system, in which the concentration of oxygen is measured, and the target flow or relevant flow of oxygen is thereby determined and achieved from controlling the flow of the first oxygen rich gas, from a gaseous source of oxygen at a pre-determined concentration.

The person skilled in the art will determine the optimal concentration of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will also weigh out the benefits of increasing the oxygen content in the absorption tower **41,** against the drawback of a higher gas volume downstream the absorption tower **41,** which implies equipment, such as heat exchangers, of a larger size, for heating tail gas.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature ranging as high as 1000 °C. More in particular, the means for measuring the temperature is an infrared thermometer for measuring and indicating a temperature ranging as high as 1000 °C.

### Examples

### 1. Recirculation of tail-gas at 99.3%

Reference is made to Figure 2A. Ammonia **32** was mixed with pressurized air **65** in a mixing apparatus **35.** The resulting ammonia/compressed air mixture **14** was fed to an ammonia converter **37,** at a temperature ranging from 800 to 950 °C and operating at a pressure of 5.4 bara. The oxygen to ammonia mola ratio at the inlet of the ammonia converter **37** was at least 1.25. In the ammonia converter **37,** ammonia was oxidized over a mixed platinum/rhodium catalyst, thus obtaining a low-pressure NOₓ gas/steam mixture **15,** comprising water and nitric oxide (NO). The heat of the mixture coming out of the ammonia converter was recovered, thereby producing steam that was supplied to a steam turbine **51** and that was also exported to a grid and used for heating the tail gas **5** as will be described below. The NOx gas/stream mixture was subsequently cooled down in a gas cooler/condenser **38** to a temperature where the water condenses, and an aqueous diluted nitric acid mixture **17** was separated from a gaseous NOₓ stream **22.** The aqueous diluted acid mixture **17** was sent to the absorption tower **41.** The gaseous NOₓ stream **22** was further oxidized to further convert the NO to NO₂ and N₂O₄. The gaseous NOₓ stream **22** then was compressed in the NOx gas compressor **40** to a pressure of 12 bara, thereby producing the pressurised NOₓ gaseous stream **24.** The pressurised NOₓ gaseous stream **24** was cooled down in a second gas cooler/condenser **39** and sent to the absorption tower **41** too. Inside the absorption tower **41,** the NOₓ gas reacted with water to produce the tail gas **5** and a stream of raw nitric acid also containing residual NOₓ gas, which was subsequently fed to a bleacher **62.** The oxygen content in the tail gas **5** was maintained at 3% using the off-gases **77** from a bleacher **62** which were supplied downstream the ammonia converter **37** and upstream the NOₓ gas compressor **40.** The tail gas **5** was consecutively heated in a heat exchanger **79,** treated in a De-NOₓ unit **70,** and heated by the gaseous NOₓ stream **15** in the heat exchange system **43** to 500 °C, thereby producing a heated tail gas stream. The heated tail gas stream was expanded over a tail gas expander **7,** thereby producing an expanded tail gas **64.** The expanded tail gas **64** was used for heating the tail gas **5** in the heat exchanger **7** and was subsequently splitted, over a T-tube **55,** into a first tail gas stream **10** representing 99.3% of the expanded tail gas **64,** and a second tail gas stream **80.** The first tail gas **10** was then mixed with oxygen-rich gas **50** having a pressure of 7 bara, thereby providing an oxygen-containing gas **56** in the absence of further pressurised air **34** being supplied, such that, during further continuous operation, tail gas **5** was produced, in the absence of an air compressor, heated, expanded and splitted and recirculated to the ammonia converter **37,** together with an oxygen-rich gas **50.** The amount of the oxygen-rich gas **50** fed to the process was controlled in order to ensure that the oxygen to ammonia ratio at the inlet of the ammonia converter **37** was measured and, in case it was lower than 1.25, the amount of the oxygen-rich gas **50** was adjusted, such that the oxygen to ammonia molar ratio at the inlet of the ammonia converter **37** was at least 1.25. The temperature inside the ammonia converter **37** was measured and established to have remained in the range of 800 to 950 °C. The residual 0.7 % of second tail gas stream **80** was sent to an additional tail gas expander **60.** The residual NOₓ gas in the raw nitric acid stream **27** was then stripped out with a gaseous medium **72** such as an oxygen-containing gas or air, inside the bleacher unit **62,** operating at about the same pressure as the ammonia converter of 5.4 bara. The drive power for both the air compressor **36** and the NOₓ compressor **40** originated from the tail gas expander **7,** the additional tail gas expander **60** and the steam turbine **51.** The net power associated to the NOₓ gas compressor **40,** the tail gas expander **7** and the additional tail gas expander **60** was 8 kWh/t 100% HNO₃. This power was produced by the steam turbine **51** or was provided by an electrical motor. The specific steam export amounted to 1100 to 1300 kg / t nitric acid.

### 2. Comparative example: no recirculation of tail-gas

Reference is made to Figure 1. Ammonia **32** was mixed with compressed air **34** in a mixing apparatus **35.** The oxygen to ammonia ratio at the inlet of the ammonia converter **37** was at least 1.25. In the ammonia converter **37,** the ammonia in the mixture of ammonia **32** and compressed air **34** was oxidized, at a pressure of 5.4 bara, over a mixed platinum/rhodium catalyst, thus obtaining a low-pressure NOₓ gas/steam mixture **15,** comprising water and nitric oxide (NO). The heat of the mixture coming out of the ammonia converter was recovered for supplying the steam turbine **51** and was also exported to a grid and used for heating the tail gas **5** as will be described below. The NOₓ gas/stream mixture was subsequently cooled down in a gas cooler/condenser **38** to a temperature where the water condenses, and an aqueous diluted nitric acid mixture **17** was separated from a gaseous NOₓ stream **22.** Subsequently, the gaseous NOₓ stream **22** was consecutively further oxidized to further convert the NO to NO₂ and N₂O₄, cooled down again in another gas cooler/condenser **39,** and then directed to an absorption tower **41.** On the other end, the gaseous NOₓ stream **22** was compressed in the NOx gas compressor **40** to a pressure of 12 bara, thereby producing the pressurised NOₓ gaseous stream **24.** The pressurised NOₓ gaseous stream **24** was sent to the absorbtion tower **41** too. Inside the absorption tower **41,** the NOₓ gaseous stream **24** reacted with water to produce the tail gas **5** and a stream of raw nitric acid **27** also containing residual NOₓ gas, which was fed to a bleacher **62.** The heat from the gaseous NOₓ stream **15** was used for heating the tail gas **5** in the heat exchange system **43** to 450 °C. The entire tail gas stream **5** was sent to the tail gas expander **7.** The residual NOₓ gas in the raw nitric acid stream **27** was then stripped out with a gaseous medium **72** such as an oxygen-containing gas or air, inside the bleacher unit **62,** operating at 5.4 bara. The drive power for the air compressor **36** and the NOx compressor **40** originated from the tail gas expander 7 and the steam turbine **51.** This power was produced by the steam turbine **51.** The specific steam export amounted to 600 to 800 kg / t nitric acid.

## Claims

1. A production plant for producing nitric acid at reduced power consumption and reduced emissions, comprising:
• a source of an oxygen-rich gas, particularly a source of pressurized oxygen-rich gas, such as a high pressure water electrolyzer;
• a mixing apparatus downstream the source of oxygen-rich gas, for mixing a first oxygen-containing gas with an ammonia gas stream, to produce an ammonia/oxygen-containing gas mixture;
• an ammonia converter, particularly operable at a pressure equal to or higher than P1 and lower than P2, for oxidising ammonia in the ammonia/oxygen-containing gas mixture, to produce a NOx gas/steam mixture comprising water and nitric oxide;
• a means for regulating the concentration of ammonia and/or of oxygen in the ammonia converter, particularly a means for controlling the flow of the oxygen-rich gas and/or a means for controlling the flow of the ammonia gas stream, for maintaining the oxygen to ammonia molar ratio inside the ammonia converter at a ratio of at least 1.2;
• a first gas cooler/condenser downstream the ammonia converter, to produce an aqueous diluted nitric acid mixture and a gaseous NOₓ stream;
• a NOₓ gas compressor for compressing the gaseous NOₓ stream, to produce a compressed NOₓ gas stream at a pressure P2;
• an absorption tower for absorbing the NOₓ gases from the compressed NOₓ gas stream in water, to produce a stream of raw nitric acid containing residual NOₓ gas, and a tail gas comprising NOₓ gases, comprising an absorption tower tail gas outlet for evacuating the tail gas;
• a heat exchange system located upstream the gas cooler/condenser for exchanging heat between the NOₓ gas/steam mixture and the tail gas, in particular for heating a tail gas stream with the heat from the NOx gas/steam coming from the ammonia converter;
• a second gas cooler/condenser for separating and condensing steam from the compressed NOₓ gas stream, particularly before the compressed NOx gas stream is provided to the absorption tower;
• a supply for a second oxygen-containing gas having either (i) a pressure equal to or higher than P1 and up to P2, for supplying oxygen downstream the ammonia converter and upstream the NOx gas compressor, or (ii) a pressure higher than P2, for supplying oxygen to the compressed NOx gas stream,
• a means for controlling the flow of the second oxygen-containing gas, such that a tail gas stream contains at least 0.5% by volume oxygen; and
• a first pressure release means, in particular tail gas expander, located downstream the heat exchange system, for expanding a stream of tail gas downstream the absorption tower, to produce a first expanded tail gas at a pressure equal to or higher than P1 and lower than P2, wherein the first pressure release means, in particular the tail gas expander, can at least partly power the NOₓ gas compressor;
**characterised in that** the production plant further comprises:
• a means for splitting a tail gas into a first tail gas stream and a second tail gas stream, wherein the first tail gas is in fluid communication with the oxygen-rich gas, particularly wherein the first tail gas stream has a pressure equal to or higher than P1 and up to P2, and wherein the mixing of the oxygen-rich gas and the first tail gas stream provides the first oxygen-containing gas.

2. A production plant for producing nitric acid according to claim 1, comprising, particularly a source of pressurised air for pressurizing the system, particularly during startup, in fluid communication with a system comprising:
• a source of an oxygen-rich gas, particularly a source of a pressurized oxygen-rich gas, such as a high-pressure water electrolyzer;
• a mixing apparatus downstream the source of the oxygen-rich gas, for mixing a first oxygen-containing gas with an ammonia gas stream, to produce an ammonia/oxygen-containing gas mixture;
• means for measuring the oxygen concentration in the first oxygen-containing gas;
• means for adjusting the concentration of oxygen in the first oxygen-containing gas such that the oxygen to ammonia molar ratio at the inlet of the ammonia converter is at least 1.2 or at least 1.25, particularly is between 1.2 and 9 or 1.25 and 9;
• means for adjusting the supply of the ammonia gas stream to the mixing apparatus;
• an ammonia converter, operable at a pressure P1, for oxidising ammonia in the ammonia/oxygen-containing gas mixture, to produce a NOₓ gas/steam mixture, comprising water and nitric oxide;
• means for measuring the temperature in the ammonia converter;
• a first gas cooler/condenser downstream the ammonia converter , to produce an aqueous diluted nitric acid mixture and a gaseous NOx stream;
• a NOx gas compressor for compressing the gaseous NOx stream, to produce a compressed NOs gas stream at a pressure P2;
• an absorption tower for absorbing the NOx gases from the compressed NOx gas stream in water, to produce a stream of raw nitric acid-containing residual NOx gas and a tail gas comprising NOₓ gases, comprising an absorption tower tail gas outlet for evacuating the tail gas;
• means for measuring the concentration of oxygen in a tail gas stream downstream the absorption tower;
• a heat exchange system located upstream the gas cooler/condenser for exchanging heat between the NOx gas/steam mixture and the tail gas;
• a second additional gas cooler/condenser, for separating and condensing steam from the compressed NOx gas stream, to produce a compressed NOx gas stream, particularly having a temperature ranging from 20 to 60 °C;
• a supply of a second oxygen-containing gas having either (i) a pressure equal to or higher than P1 and up to P2, for supplying oxygen upstream the NOₓ gas compressor; or a pressure higher than P2, for supplying oxygen to the compressed NOx gas stream, such that the tail gas contains at least 0.5% by volume oxygen; and
• a tail gas expander located downstream the heat exchange system, for expanding a stream of tail gas downstream the absorption tower, to produce a first expanded tail gas at a pressure P1, wherein the tail gas expander can at least partly power the NOₓ gas compressor;
**characterised in that** the system further comprises:
• a means for splitting a stream of tail gas downstream the absorption tower into a first tail gas stream, in fluid communication with the oxygen-rich gas and a second tail gas stream; and
• a means for adjusting the amount of tail gas being splitted into the first tail gas stream and the second tail gas stream.

3. The production plant according to claim 1 or 2, wherein the system further comprises one or more of:
• a steam turbine, wherein the steam turbine can at least partly power the NOx gas compressor;
• a heat exchanger for exchanging heat between the first expanded tail gas and a colder tail gas stream, wherein the first expanded tail gas exits the heat exchanger particularly at a temperature below 300 °C, and wherein the means for splitting is positioned downstream the heat exchanger and in fluid communication with the first expanded tail gas;
• a De-NOₓ treatment unit; and
• a second pressure release means for expanding the second tail gas stream to atmospheric pressure, to produce a second expanded tail gas.

4. The production plant according to any one of claims 1 to 3, further comprising a bleacher for bleaching the stream of raw nitric acid-containing residual NOx gas, to provide a stream of bleached nitric acid, having an inlet for an oxygen-rich bleaching gas, and an outlet for off-gases in fluid communication with any gas stream downstream the ammonia converter and upstream the NOx gas compressor if the bleacher operates at a pressure equal to or higher than P1 and up to equal to P2, or in fluid communication with any stream downstream the NOx gas compressor and upstream the absorption tower if the bleacher operates at a pressure higher than P2, such that the supply for the second oxygen containing gas comes at least partly from the off-gases.

5. The production plant according to claim 4, wherein part of the oxygen-rich gas or part of the first oxygen-containing gas or part of the tail gas, is in fluid communication with the inlet of the bleacher, such that the oxygen rich-bleaching gas is at least partly provided by part of the oxygen-rich gas by part of the first oxygen-containing gas or by part of a tail gas stream.

6. The production plant according to any one of claims 1 to 5, further comprising a stream of a second oxygen-containing gas in direct fluid communication with any tail gas stream, particularly a stream of pressurized oxygen-rich gas in direct fluid communication with any stream of tail gas downstream the absorption tower or upstream the first pressure release means.

7. The production plant according to any one of claims 1 to 6, wherein the oxygen-rich gas, the second oxygen-containing gas, the oxygen-rich bleaching gas and the bleacher off-gases are all at least partly provided by a water electrolyser, particularly a high pressure water electrolyser.

8. The production plant according to any one of claims 1 to 6, wherein the fluid communication between the source of pressurised air and the system is in direct fluid communication with the oxygen-rich gas.

9. A method for producing nitric acid at reduced power consumption and reduced emissions, in a production plant according to any one of claims 1 to 8, comprising the steps of:
prior to step c), providing or preparing an oxygen-rich gas and a first oxygen-containing gas, and providing an ammonia gas stream;
c) supplying the ammonia gas stream and a first oxygen-containing gas to the mixing apparatus, thereby producing the ammonia/oxygen-containing gas mixture;
d) oxidising ammonia in the ammonia/oxygen-containing gas mixture in the ammonia converter, particularlyat a pressure equal to or higher than P1 and lower than P2 and at a temperature ranging from 800 to 950 °C, thereby producing the gaseous NOx gas/steam mixture, comprising water and nitric oxide;
e) cooling the NOx gas in the gaseous NOx gas/steam mixture in the heat exchange system and in the first gas/cooler condenser, thereby producing an aqueous diluted nitric acid mixture and a gaseous NOx stream;
f) compressing the gaseous NOₓ stream in the NOₓ gas compressor, thereby providing the pressurized NOx compressed gas stream having a pressure P2;
g) absorbing the pressurized gaseous NOₓ stream in the absorption tower, thereby providing the stream of raw nitric acid-containing residual NOx gas and the tail gas comprising NOₓ gases;
h) heating the tail gas in the heat exchange system, with the heat from the NOₓ gas/steam mixture coming from the ammonia converter, particularly to a temperature ranging from 150 to 650 °C;
i) cooling the pressurized NOx gas stream in the second gas cooler/condenser, thereby providing a pressurized NOₓ gas stream, particularly having a temperature ranging from 20 to 60 °C; and
j) expanding at least part of the tail gas obtained in step h) in a first pressure release means, thereby providing a first expanded tail gas;
**characterised in that** the method further comprises the steps of:
k) splitting a tail gas stream with a first means for splitting into a first tail gas stream and a second tail gas stream, and mixing the first tail gas stream with the oxygen-rich gas, thereby providing the first oxygen-containing gas;
m) adjusting the flow of the oxygen-rich gas being mixed in step k) or the flow of the ammonia gas stream, such that the oxygen to ammonia molar ratio at the inlet of the ammonia converter is maintained to a ratio of at least 1.2 or at least 1.25, particularly between 1.2 and 9 or between 1.25 and 9; and
q) adjusting the flow of the oxygen-rich gas at a pressure equal to or higher than P1 and up to P2 upstream the NOₓ gas compressor, or at a pressure higher than P2 downstream the NOₓ gas compressor, such that the oxygen concentration in a tail gas stream is maintained at a concentration of at least 0.5% by volume.

10. A method for producing nitric acid at reduced power consumption and reduced emissions according to claim 9, comprising the steps of:
a) preferably, pressurizing the system by supplying pressurised air in the system;
b) preferably, operating the NOₓ gas compressor or a first pressure release means, preferably a tail gas expander, using external power, thereby inducing a pressurised air flow in the system and a pressure P2, downstream the NOₓ gas compressor;
c) supplying the ammonia gas stream and a first oxygen containing gas to the mixing apparatus, thereby producing the ammonia/oxygen-containing gas mixture;
d) oxidising ammonia in the ammonia/oxygen-containing gas mixture in the ammonia converter, particularly at a pressure P1 and at a temperature ranging from 800 to 950 °C, thereby producing the gaseous NOx gas/steam mixture, comprising water and nitric oxide;
e) cooling the NOx gas in the gaseous NOx gas/steam mixture in the heat exchange system and in the first gas/cooler condenser, thereby producing an aqueous diluted nitric acid mixture and a gaseous NOx stream;
f) compressing the gaseous NOx stream in the NOx gas compressor, thereby providing the pressurized NOx compressed gas stream having a pressure P2;
g) absorbing the pressurized gaseous NOₓ stream in the absorption tower, thereby providing the stream of raw nitric acid-containing residual NOx gas and the tail gas comprising NOₓ gases;
h) heating the tail gas in the heat exchange system, with the heat from the NOₓ gas/steam mixture coming from the ammonia converter, particularly to a temperature ranging from 150 to 650 °C;
i) cooling the pressurized NOₓ gas stream in the second gas cooler/condenser, thereby providing a pressurized NOₓ gas stream, particularly having a temperature ranging from 20 to 60 °C; and
j) expanding the tail gas obtained in step h) in the tail gas expander, thereby providing the first expanded tail gas;
**characterised in that** the method further comprises the steps of:
k) splitting a tail gas stream with a means for splitting into a first tail gas stream and a second tail gas stream and mixing the first tail gas stream with the oxygen-rich gas, thereby providing the oxygen-containing gas;
l) measuring the oxygen concentration in the oxygen-containing gas;
m) if the oxygen concentration measured in step l) is such that the oxygen to ammonia molar ratio in the ammonia converter is less than 1.2 or 1.25, adjusting the supply of the oxygen-rich gas, for instance having a pressure P2, and being mixed in step k) or adjusting the supply of the ammonia gas stream in step c), such that the oxygen to ammonia molar ratio at the inlet of the ammonia converter is at least 1.2 or 1.25, preferably between 1.2 and 9 or between 1.25 and 9;
n) measuring the temperature in the ammonia converter;
o) adjusting the volume of the first tail gas stream being mixed in step k) or the ammonia gas stream supplied in step c), if the temperature measured in step n) is outside the range of 800-950 °C, such that the temperature in the ammonia converter is maintained in the range of 800-950 °C;
p) measuring the oxygen concentration in a tail gas downstream the absorption tower;
q) if the oxygen concentration measured in step p) is less 0.5% by volume oxygen, adjusting the supply of the oxygen-rich gas at a pressure equal to or higher than P1 and up to P2 upstream the NOₓ gas compressor, or at a pressure higher than P2 downstream the NOₓ gas compressor, or adjusting the flow of the second oxygen-containing gas, such that the tail gas contains at least 0.5% by volume oxygen;
r) repeating steps c) to q).

11. The method according to claim 9 or 10, wherein, the first tail gas stream, particularly first expanded tail gas stream, mixed in step k) is particularly obtained after step j), and wherein the method further comprises the steps of:
s) particularly before step k), heating up, in the heat exchanger, a tail gas stream that is colder than the first expanded tail gas with the first expanded tail gas, thereby bringing the first expanded tail gas to a temperature below 300°C, in particular before step k), heating up, in the heat exchanger the tail gas obtained in step g) with the first expanded tail gas obtained in step j), thereby bringing the tail gas to be mixed in step k) to a temperature below 300 °C;
t) treating the tail gas stream, particularly obtained in step s, in the De-NOₓ treatment unit;
u) expanding the second tail gas stream in the second pressure release means, thereby providing the second expanded tail gas; and
v) recovering at least part of the steam generated in the ammonia converter in the steam turbine.

12. The method according to any one of claims 9 to 11, further comprising the step of:
w) bleaching the stream of raw nitric acid-containing residual NOₓ gas in the bleacher, thereby producing the stream of bleached nitric acid.

13. The method according to claim 12, further comprising the step of:
w1) supplying part of the oxygen-rich or part of the first oxygen-containing gas obtained in step k) or part of the tail gas obtained in step g), to the inlet of the bleacher in step w).

14. The method according to any one of claims 9 to 13, further comprising the step of:
x) supplying a stream of an oxygen-rich gas, particularly as a stream of a pressurized oxygen-rich gas, to a tail gas stream, particularly to a tail gas stream upstream the first pressure release means.

15. The method according to any one of claims 9 to 14, further comprising the steps of:
y) operating the water electrolyser, thereby producing oxygen-gas, particularly operating a high pressure water electrolyser, thereby producing pressurized oxygen gas; and
z) providing, from the oxygen produced by the water electrolyser in step y), at least part of the oxygen-rich gas, the second oxygen containing gas, the oxygen-rich bleaching gas, and the bleacher off gases.

16. The method according to any of claims 10 to 15, wherein, in step a), the pressurised air is supplied in the stream in direct fluid communication with the oxygen-rich gas.

17. The use of the production plant according to any one of claims 1 to 8 for performing the method according to any one of claims 9 to 16.

18. A method for revamping an existing production plant for producing nitric acid, wherein the existing production plant comprises:
• an air compressor for providing a compressed air stream;
• a mixing apparatus, for mixing the compressed air stream with an ammonia gas stream, to produce an ammonia/oxygen-containing gas mixture;
• an ammonia converter operable at a pressure equal to or higher than P1 but lower than P2, for oxidising ammonia in the ammonia/oxygen-containing gas mixture, to produce a NOₓ gas/steam mixture, comprising water and nitric oxide;
• a first gas cooler/condenser, downstream the ammonia converter, to produce an aqueous diluted nitric acid mixture, and a gaseous NOₓ stream;
• a NOₓ gas compressor for compressing the gaseous NOₓ stream, to produce a pressurized NOx gas stream at a pressure P2;
• an absorption tower for absorbing the NOₓ gases from the pressurized NOₓ gas stream in water, to produce a stream of raw nitric acid-containing residual NOₓ gas and a tail gas comprising NOₓ gases;
• a heat exchange system for exchanging heat between the NOₓ/gas steam mixture and the tail gas, particularly for heating a tail gas stream with the heat from the NOx gas/steam mixture from the ammonia converter;
• a second gas cooler/condenser for separating and condensing steam from the compressed NOₓ gas stream between the NOx compressor and the absorption tower, and
• a tail gas expander for expanding a stream of tail gas downstream the absorption tower, to produce an expanded tail gas at a pressure P1, wherein the tail gas expander can at least partly power the NOₓ gas compressor
into a production plant according to any one of claims 1 to 8, comprising the steps of:
• introducing a source of pressurised air in fluid communication with the production plant;
• introducing a supply or source of an oxygen-rich gas, such as a high pressure water electrolyser, providing part of a first oxygen-containing gas, upstream of and in fluid communication with the mixing apparatus;
• introducing a means for regulating the concentration of ammonia and/or oxygen in the ammonia converter, particularly a means for controlling the flow of the oxygen-rich gas or the flow of the first oxygen-containing gas and/or a means for controlling the flow of the ammonia gas stream, for maintaining the oxygen to ammonia molar ratio inside the ammonia converter at a ratio of at least 1.2 or at least 1.25, particularly between 1.2 and 9 or between 1.25 and 9;
• introducing a supply of a second oxygen-containing gas, having either (i) a pressure equal to or higher than P1 and upto P2 for supplying oxygen upstream the NOx gas compressor, or (ii) a pressure higher than P2, for supplying oxygen to the compressed NOx gas stream, such that a tail gas stream contains at least 0.5% by volume of oxygen;
• introducing means for splitting a stream of tail gas into a first tail gas stream and a second tail gas stream, wherein the first tail gas stream has a pressure equal to or higher than P1 and upto P2, and is in fluid communication with the oxygen-rich gas, which, upon mixing with the oxygen-rich gas provides the first oxygen-containing gas;
• particularly, introducing means for adjusting the amount of tail gas being split into the first tail gas stream and the second tail gas stream; and
• removing the air compressor.

## Patentansprüche

1. Produktionsanlage zur Herstellung von Salpetersäure mit verringertem Stromverbrauch und verringerten Emissionen, umfassend:
• eine Quelle eines sauerstoffreichen Gases, insbesondere eine Quelle von druckbeaufschlagtem sauerstoffreichem Gas, wie z.B. eine Hochdruck-Wasserelektrolysevorrichtung;
• eine Mischvorrichtung stromabwärts der Quelle von sauerstoffreichem Gas zum Mischen eines ersten sauerstoffhaltigen Gases mit einem Ammoniakgasstrom, um ein Ammoniak/sauerstoffhaltiges-Gas-Gemisch zu erzeugen;
• einen Ammoniakkonverter, der insbesondere bei einem Druck von gleich oder höher als P1 und niedriger als P2 betrieben werden kann, zur Oxidation von Ammoniak in dem Ammoniak/sauerstoffhaltiges-Gas-Gemisch, um ein NOx-Gas/Dampf-Gemisch, das Wasser und Stickoxid umfasst, zu erzeugen
• ein Mittel zum Regulieren der Konzentration von Ammoniak und/oder Sauerstoff in dem Ammoniakkonverter, insbesondere ein Mittel zum Steuern des Flusses des sauerstoffreichen Gases und/oder ein Mittel zum Steuern des Flusses des Ammoniakgasstroms, um das molare Verhältnis von Sauerstoff zu Ammoniak in dem Ammoniakkonverter bei einem Verhältnis von wenigstens 1,2 zu halten;
• einen ersten Gaskühler/Kondensator stromabwärts des Ammoniakkonverters, um ein wässriges verdünntes Salpetersäuregemisch und einen gasförmigen NOₓ-Strom zu erzeugen;
• einen NOₓ-Gaskompressor zum Komprimieren des gasförmigen NOₓ-Stroms, um einen komprimierten NOₓ-Gasstrom mit einem Druck P2 zu erzeugen;
• einen Absorptionsturm zum Absorbieren der NOₓ-Gase aus dem komprimierten NOₓ-Gasstrom in Wasser, um einen Strom von roher Salpetersäure, der restliches NOₓ-Gas enthält, und ein Endgas, das NOₓ-Gase umfasst, zu erzeugen, umfassend einen Absorptionsturm-Endgasauslass zum Ablassen des Endgases;
• ein Wärmetauschsystem, das stromaufwärts des Gaskühler/Kondensators angeordnet ist, zum Wärmetausch zwischen dem NOₓ-Gas/Dampf-Gemisch und dem Endgas, insbesondere zum Erhitzen eines Endgasstroms mit der Wärme aus dem NOx-Gas/Dampf, der von dem Ammoniakkonverter kommt;
• einen zweiten Gaskühler/Kondensator zum Abtrennen und Kondensieren von Dampf aus dem komprimierten NOₓ-Gasstrom, insbesondere bevor der komprimierte NOx-Gasstrom dem Absorptionsturm zugeführt wird;
• eine Zufuhr für ein zweites sauerstoffhaltiges Gas mit entweder (i) einem Druck von gleich oder höher als P1 und bis zu P2 zum Zuführen von Sauerstoff stromabwärts des Ammoniakkonverters und stromaufwärts des NOx-Gaskompressors, oder (ii) einem Druck von höher als P2 zum Zuführen von Sauerstoff zu dem komprimierten NOx-Gasstrom,
• ein Mittel zum Steuern des Flusses des zweiten sauerstoffhaltigen Gases, so dass ein Endgasstrom wenigstens 0,5 Vol.-% Sauerstoff enthält; und
• ein erstes Druckentlastungsmittel, insbesondere ein Endgasexpander, das stromabwärts des Wärmetauschsystems angeordnet ist, zum Expandieren eines Endgasstroms stromabwärts des Absorptionsturms, um ein erstes expandiertes Endgas mit einem Druck von gleich oder höher als P1 und niedriger als P2 zu erzeugen, wobei das erste Druckentlastungsmittel, insbesondere der Endgasexpander, den NOₓ-Gaskompressor wenigstens teilweise mit Energie versorgen kann;
**dadurch gekennzeichnet, dass** die Produktionsanlage ferner umfasst:
• ein Mittel zum Aufteilen eines Endgases in einen ersten Endgasstrom und einen zweiten Endgasstrom, wobei das erste Endgas in Fluidverbindung mit dem sauerstoffreichen Gas steht, insbesondere wobei der erste Endgasstrom einen Druck von gleich oder höher als P1 und bis zu P2 aufweist und wobei das Mischen des sauerstoffreichen Gases und des ersten Endgasstroms das erste sauerstoffhaltige Gas bereitstellt.

2. Produktionsanlage zur Herstellung von Salpetersäure nach Anspruch 1, umfassend insbesondere eine Druckluftquelle zum Druckbeaufschlagen des Systems, insbesondere während des Anfahrens, in Fluidkommunikation mit einem System umfassend:
• eine Quelle eines sauerstoffreichen Gases, insbesondere eine Quelle eines druckbeaufschlagten sauerstoffreichen Gases, wie z.B. eine Hochdruck-Wasserelektrolysevorrichtung;
• eine Mischvorrichtung stromabwärts der Quelle des sauerstoffreichen Gases zum Mischen eines ersten sauerstoffhaltigen Gases mit einem Ammoniakgasstrom, um ein Ammoniak/sauerstoffhaltiges-Gas-Gemisch zu erzeugen;
• Mittel zum Messen der Sauerstoffkonzentration in dem ersten sauerstoffhaltigen Gas;
• Mittel zum Einstellen der Sauerstoffkonzentration in dem ersten sauerstoffhaltigen Gas, so dass das molare Verhältnis von Sauerstoff zu Ammoniak an dem Einlass des Ammoniakkonverters wenigstens 1,2 oder wenigstens 1,25 beträgt, insbesondere zwischen 1,2 und 9 oder 1,25 und 9 liegt;
• Mittel zum Einstellen der Zufuhr des Ammoniakgasstroms zu der Mischvorrichtung;
• einen Ammoniakkonverter, der bei einem Druck P1 betrieben werden kann, zum Oxidieren von Ammoniak in dem Ammoniak/sauerstoffhaltiges-Gas-Gemisch, um ein NOₓ-Gas/Dampfgemisch, das Wasser und Stickoxid umfasst, zu erzeugen;
• Mittel zum Messen der Temperatur in dem Ammoniakkonverter;
• einen ersten Gaskühler/Kondensator stromabwärts des Ammoniakkonverters, um ein wässriges verdünntes Salpetersäuregemisch und einen gasförmigen NOx-Strom zu erzeugen;
• einen NOx-Gaskompressor zum Komprimieren des gasförmigen NOx-Stroms, um einen komprimierten NOs-Gasstrom mit einem Druck P2 zu erzeugen;
• einen Absorptionsturm zum Absorbieren der NOx-Gase aus dem komprimierten NOx-Gasstrom in Wasser, um einen Strom von rohem salpetersäurehaltigem NOx-Restgas und ein Endgas, das NOₓ-Gase umfasst, zu erzeugen, umfassend einen Absorptionsturm-Endgasauslass zum Ablassen des Endgases;
• Mittel zum Messen der Sauerstoffkonzentration in einem Endgasstrom stromabwärts des Absorptionsturms;
• ein Wärmetauschsystem, das stromaufwärts des Gaskühler/Kondensators angeordnet ist, zum Wärmetausch zwischen dem NOx-Gas/Dampf-Gemisch und dem Endgas;
• einen zweiten zusätzlichen Gaskühler/Kondensator zum Abtrennen und Kondensieren von Dampf aus dem komprimierten NOx-Gasstrom, um einen komprimierten NOx-Gasstrom zu erzeugen, insbesondere mit einer Temperatur in dem Bereich von 20 bis 60 °C;
• eine Zufuhr eines zweiten sauerstoffhaltigen Gases mit entweder (i) einem Druck von gleich oder höher als P1 und bis zu P2 zum Zuführen von Sauerstoff stromaufwärts des NOₓ-Gaskompressors; oder einem Druck von höher als P2 zum Zuführen von Sauerstoff zu dem komprimierten NOx-Gasstrom, so dass das Endgas wenigstens 0,5 Vol.-% Sauerstoff enthält; und
• einen Endgasexpander, der stromabwärts des Wärmetauschsystems angeordnet ist, zum Expandieren eines Endgasstroms stromabwärts des Absorptionsturms, um ein erstes expandiertes Endgas mit einem Druck P1 zu erzeugen, wobei der Endgasexpander den NOₓ-Gaskompressor wenigstens teilweise mit Energie versorgen kann;
**dadurch gekennzeichnet, dass** das System ferner umfasst:
• ein Mittel zum Aufteilen eines Endgasstroms stromabwärts des Absorptionsturms in einen ersten Endgasstrom in Fluidverbindung mit dem sauerstoffreichen Gas und einen zweiten Endgasstrom; und
• ein Mittel zum Einstellen der Menge an Endgas, das in den ersten Endgasstrom und den zweiten Endgasstrom aufgeteilt wird.

3. Produktionsanlage nach Anspruch 1 oder 2, wobei das System ferner eines oder mehrere umfasst von:
• eine Dampfturbine, wobei die Dampfturbine den NOx-Gaskompressor wenigstens teilweise mit Energie versorgen kann;
• einen Wärmetauscher zum Wärmetausch zwischen dem ersten expandierten Endgas und einem kälteren Endgasstrom, wobei das erste expandierte Endgas den Wärmetauscher insbesondere mit einer Temperatur unter 300 °C verlässt und wobei das Mittel zum Aufteilen stromabwärts des Wärmetauschers und in Fluidverbindung mit dem ersten expandierten Endgas angeordnet ist;
• eine Ent-NOₓ-behandlungseinheit; und
• ein zweites Druckentlastungsmittel zum Expandieren des zweiten Endgasstroms auf Atmosphärendruck, um ein zweites expandiertes Endgas zu erzeugen.

4. Produktionsanlage nach einem der Ansprüche 1 bis 3, ferner umfassend einen Bleicher zum Bleichen des Stroms von rohem salpetersäurehaltigem NOx-Restgas, um einen Strom von gebleichter Salpetersäure bereitzustellen, der einen Einlass für ein sauerstoffreiches Bleichgas und einen Auslass für Abgase aufweist, in Fluidverbindung mit einem beliebigen Gasstrom stromabwärts des Ammoniakkonverters und stromaufwärts des NOx-Gaskompressors, wenn der Bleicher bei einem Druck von gleich oder höher als P1 und bis zu P2 arbeitet, oder in Fluidverbindung mit einem beliebigen Strom stromabwärts des NOx-Gaskompressors und stromaufwärts des Absorptionsturms, wenn der Bleicher mit einem Druck von höher als P2 arbeitet, so dass die Zufuhr für das zweite sauerstoffhaltige Gas wenigstens teilweise aus den Abgasen kommt.

5. Produktionsanlage nach Anspruch 4, wobei ein Teil des sauerstoffreichen Gases oder ein Teil des ersten sauerstoffhaltigen Gases oder ein Teil des Endgases in Fluidverbindung mit dem Einlass des Bleichers steht, so dass das sauerstoffreiche Bleichgas wenigstens zum Teil durch einen Teil des sauerstoffreichen Gases, durch einen Teil des ersten sauerstoffhaltigen Gases oder durch einen Teil eines Endgasstroms bereitgestellt wird.

6. Produktionsanlage nach einem der Ansprüche 1 bis 5, ferner umfassend einen Strom eines zweiten sauerstoffhaltigen Gases in direkter Fluidverbindung mit einem beliebigen Endgasstrom, insbesondere einem Strom von druckbeaufschlagtem sauerstoffreichem Gas in direkter Fluidverbindung mit einem beliebigen Endgasstrom stromabwärts des Absorptionsturms oder stromaufwärts des ersten Druckentlastungsmittels.

7. Produktionsanlage nach einem der Ansprüche 1 bis 6, wobei das sauerstoffreiche Gas, das zweite sauerstoffhaltige Gas, das sauerstoffreiche Bleichgas und die Bleicherabgase alle wenigstens zum Teil von einer Wasserelektrolysevorrichtung, insbesondere einer Hochdruck-Wasserelektrolysevorrichtung, bereitgestellt werden.

8. Produktionsanlage nach einem der Ansprüche 1 bis 6, wobei die Fluidverbindung zwischen der Druckluftquelle und dem System in direkter Fluidverbindung mit dem sauerstoffreichen Gas steht.

9. Verfahren zur Herstellung von Salpetersäure mit verringertem Stromverbrauch und verringerten Emissionen in einer Produktionsanlage nach einem der Ansprüche 1 bis 8, umfassend die Schritte:
vor Schritt c) Bereitstellen oder Herstellen eines sauerstoffreichen Gases und eines ersten sauerstoffhaltigen Gases und Bereitstellen eines Ammoniakgasstroms;
c) Zuführen des Ammoniakgasstroms und eines ersten sauerstoffhaltigen Gases zu der Mischvorrichtung, um das Ammoniak/sauerstoffhaltiges-Gas-Gemisch zu erzeugen;
d) Oxidieren von Ammoniak in dem Ammoniak/sauerstoffhaltiges-Gas-Gemisch in dem Ammoniakkonverter, insbesondere bei einem Druck von gleich oder höher als P1 und niedriger als P2 und bei einer Temperatur in dem Bereich von 800 bis 950 °C, um das gasförmige NOx-Gas/Dampf-Gemisch, das Wasser und Stickoxid umfasst, zu erzeugen;
e) Kühlen des NOx-Gases in dem gasförmigen NOx-Gas/Dampf-Gemisch in dem Wärmetauschsystem und in dem ersten Gas/Kühler-Kondensator, um ein wässriges verdünntes Salpetersäuregemisch und einen gasförmigen NOx-Strom zu erzeugen;
f) Komprimieren des gasförmigen NOₓ-Stroms in dem NOₓ-Gaskompressor, um den druckbeaufschlagten komprimierten NOx-Gasstrom mit einem Druck P2 bereitzustellen;
g) Absorbieren des druckbeaufschlagten gasförmigen NOₓ-Stroms in dem Absorptionsturm, um den Strom von rohem Salpetersäure-enthaltendem NOx-Restgas und das Endgas, das NOₓ-Gase umfasst, bereitzustellen;
h) Erhitzen des Endgases in dem Wärmetauschsystem mit der Wärme aus dem NOₓ-Gas/Dampf-Gemisch, das aus dem Ammoniakkonverter kommt, insbesondere auf eine Temperatur in dem Bereich von 150 bis 650 °C;
i) Kühlen des druckbeaufschlagten NOx-Gasstroms in dem zweiten Gaskühler/Kondensator, um einen druckbeaufschlagten NOₓ-Gasstrom bereitzustellen, insbesondere mit einer Temperatur in dem Bereich von 20 bis 60 °C; und
j) Expandieren wenigstens eines Teils des bei Schritt h) erhaltenen Endgases in einem ersten Druckentlastungsmittel, um ein erstes expandiertes Endgas bereitzustellen;
**dadurch gekennzeichnet, dass** das Verfahren ferner die Schritte umfasst:
k) Aufteilen eines Endgasstroms mit einem ersten Mittel zum Aufteilen in einen ersten Endgasstrom und einen zweiten Endgasstrom und Mischen des ersten Endgasstroms mit dem sauerstoffreichen Gas, um das erste sauerstoffhaltige Gas bereitzustellen;
m) Einstellen des Stroms des bei Schritt k) gemischten sauerstoffreichen Gases oder des Stroms des Ammoniakgasstroms, so dass das molare Verhältnis von Sauerstoff zu Ammoniak an dem Einlass des Ammoniakkonverters bei einem Verhältnis von wenigstens 1,2 oder wenigstens 1,25, insbesondere zwischen 1,2 und 9 oder zwischen 1,25 und 9, gehalten wird; und
q) Einstellen des Flusses des sauerstoffreichen Gases auf einen Druck von gleich oder höher als P1 und bis zu P2 stromaufwärts des NOₓ-Gaskompressors oder auf einen Druck von höher als P2 stromabwärts des NOₓ-Gaskompressors, so dass die Sauerstoffkonzentration in einem Endgasstrom bei einer Konzentration von wenigstens 0,5 Vol.-% gehalten wird;

10. Verfahren zur Herstellung von Salpetersäure mit verringertem Stromverbrauch und verringerten Emissionen nach Anspruch 9, umfassend die Schritte:
a) vorzugsweise Druckbeaufschlagen des Systems durch Zuführen von Druckluft in das System;
b) vorzugsweise Betreiben des NOₓ-Gaskompressors oder eines ersten Druckentlastungsmittels, vorzugsweise eines Endgasexpanders, unter Verwendung von externer Energie, um einen Druckluftstrom in dem System und ein Druck P2 stromabwärts des NOₓ-Gaskompressors zu bewirken;
c) Zuführen des Ammoniakgasstroms und eines ersten sauerstoffhaltigen Gases zu der Mischvorrichtung, um das Ammoniak/sauerstoffhaltiges-Gas-Gemisch zu erzeugen;
d) Oxidieren von Ammoniak in dem Ammoniak/sauerstoffhaltiges-Gas-Gemisch in dem Ammoniakkonverter, insbesondere bei einem Druck P1 und einer Temperatur in dem Bereich von 800 bis 950 °C, um das gasförmige NOx-Gas/Wasserdampf-Gemisch, das Wasser und Stickoxid umfasst, zu erzeugen;
e) Kühlen des NOx-Gases in dem gasförmigen NOx-Gas/Dampf-Gemisch in dem Wärmetauschsystem und in dem ersten Gas/Kühler-Kondensator, um ein wässriges verdünntes Salpetersäuregemisch und einen gasförmigen NOx-Strom zu erzeugen;
f) Komprimieren des gasförmigen NOx-Stroms in dem NOx-Gaskompressor, um den druckbeaufschlagten komprimierten NOx-Gasstrom mit einem Druck P2 bereitzustellen;
g) Absorbieren des druckbeaufschlagten gasförmigen NOₓ-Stroms in dem Absorptionsturm, um den Strom von rohem Salpetersäure-enthaltendem NOx-Restgas und das Endgas, das NOₓ-Gase umfasst, bereitzustellen;
h) Erhitzen des Endgases in dem Wärmetauschsystem mit der Wärme aus dem NOₓ-Gas/Dampf-Gemisch, das aus dem Ammoniakkonverter kommt, insbesondere auf eine Temperatur in dem Bereich von 150 bis 650 °C;
i) Kühlen des druckbeaufschlagten NOx-Gasstroms in dem zweiten Gaskühler/Kondensator, um einen druckbeaufschlagten NOₓ-Gasstrom bereitzustellen, insbesondere mit einer Temperatur in dem Bereich von 20 bis 60 °C; und
j) Expandieren des bei Schritt h) erhaltenen Endgases in dem Endgasexpander, um das erste expandierte Endgas bereitzustellen;
**dadurch gekennzeichnet, dass** das Verfahren ferner die Schritte umfasst:
k) Aufteilen eines Endgasstroms mit einem Mittel zum Aufteilen in einen ersten Endgasstrom und einen zweiten Endgasstrom und Mischen des ersten Endgasstroms mit dem sauerstoffreichen Gas, um das sauerstoffhaltige Gas bereitzustellen;
l) Messen der Sauerstoffkonzentration in dem sauerstoffhaltigen Gas;
m) wenn die bei Schritt l) gemessene Sauerstoffkonzentration so ist, dass das molare Verhältnis von Sauerstoff zu Ammoniak in dem Ammoniakkonverter kleiner als 1,2 oder 1,25 ist, Einstellen der Zufuhr des sauerstoffreichen Gases, beispielsweise mit einem Druck P2, und Mischen bei Schritt k), oder Einstellen der Zufuhr des Ammoniakgasstroms bei Schritt c), so dass das molare Verhältnis von Sauerstoff zu Ammoniak an dem Einlass des Ammoniakkonverters wenigstens 1,2 oder 1,25, vorzugsweise zwischen 1,2 und 9 oder zwischen 1,25 und 9, beträgt;
n) Messen der Temperatur in dem Ammoniakkonverter;
o) Einstellen des Volumens des bei Schritt k) gemischten ersten Endgasstroms oder des bei Schritt c) zugeführten Ammoniakgasstroms, wenn die bei Schritt n) gemessene Temperatur außerhalb des Bereichs von 800-950 °C liegt, so dass die Temperatur in dem Ammoniakkonverter in dem Bereich von 800-950 °C gehalten wird;
p) Messen der Sauerstoffkonzentration in einem Endgas stromabwärts des Absorptionsturms;
q) wenn die bei Schritt p) gemessene Sauerstoffkonzentration weniger als 0,5 Vol.-% Sauerstoff beträgt, Einstellen der Zufuhr des sauerstoffreichen Gases mit einem Druck von gleich oder höher als P1 und bis zu P2 stromaufwärts des NOₓ-Gaskompressors oder mit einem Druck von höher als P2 stromabwärts des NOₓ-Gaskompressors oder Einstellen des Flusses des zweiten sauerstoffhaltigen Gases, so dass das Endgas wenigstens 0,5 Vol.-% Sauerstoff enthält;
r) Wiederholen der Schritte c) bis q).

11. Verfahren nach Anspruch 9 oder 10, wobei der erste Endgasstrom, insbesondere der erste expandierte Endgasstrom, der bei Schritt k) gemischt wird, insbesondere nach Schritt j) erhalten wird, und wobei das Verfahren ferner die Schritte umfasst:
s) insbesondere vor Schritt k) Erhitzen eines Endgasstroms, der kälter als das erste expandierte Endgas ist, in dem Wärmetauscher mit dem ersten expandierten Endgas, um das erste expandierte Endgas auf eine Temperatur unter 300 °C zu bringen, insbesondere vor Schritt k) Erhitzen des bei Schritt g) erhaltenen Endgases mit dem bei Schritt j) erhaltenen ersten expandierten Endgas in dem Wärmetauscher, um das bei Schritt k) zu mischende Endgas auf eine Temperatur unter 300 °C zu bringen;
t) Behandeln des Endgasstroms, insbesondere erhalten bei Schritt s, in der Ent-NOₓ-behandlungseinheit;
u) Expandieren des zweiten Endgasstroms in dem zweiten Druckentspannungsmittel, um das zweite expandierte Endgas bereitzustellen; und
v) Gewinnen wenigstens eines Teils des in dem Ammoniakkonverter erzeugten Dampfs in der Dampfturbine.

12. Verfahren nach einem der Ansprüche 9 bis 11, ferner umfassend den Schritt:
w) Bleichen des Stroms von rohem salpetersäurehaltigem NOₓ-Restgas in dem Bleicher, um den Strom von gebleichter Salpetersäure zu erzeugen.

13. Verfahren nach Anspruch 12, ferner umfassend den Schritt:
w1) Zuführen eines Teils des sauerstoffreichen oder eines Teils des bei Schritt k) erhaltenen ersten sauerstoffhaltigen Gases oder eines Teils des bei Schritt g) erhaltenen Endgases zu dem Einlass des Bleichers bei Schritt w).

14. Verfahren nach einem der Ansprüche 9 bis 13, ferner umfassend den Schritt:
x) Zuführen eines Stroms eines sauerstoffreichen Gases, insbesondere als Strom eines druckbeaufschlagten sauerstoffreichen Gases, zu einem Endgasstrom, insbesondere zu einem Endgasstrom stromaufwärts des ersten Druckentlastungsmittels.

15. Verfahren nach einem der Ansprüche 9 bis 14, ferner umfassend die Schritte:
y) Betreiben der Wasserelektrolysevorrichtung, um Sauerstoffgas zu erzeugen, insbesondere Betreiben einer Hochdruck-Wasserelektrolysevorrichtung, um druckbeaufschlagtes Sauerstoffgas ztu erzeugen; und
z) Bereitstellen wenigstens eines Teils des sauerstoffreichen Gases, des zweiten sauerstoffhaltigen Gases, des sauerstoffreichen Bleichgases und der Bleicherabgase aus dem bei Schritt y) von der Wasserelektrolysevorrichtung erzeugten Sauerstoff.

16. Verfahren nach einem der Ansprüche 10 bis 15, wobei bei Schritt a) die Druckluft in dem Strom in direkter Fluidverbindung mit dem sauerstoffreichen Gas zugeführt wird.

17. Verwendung der Produktionsanlage nach einem der Ansprüche 1 bis 8 zum Durchführen des Verfahrens nach einem der Ansprüche 9 bis 16.

18. Verfahren zum Umbauen einer bestehenden Produktionsanlage zur Herstellung von Salpetersäure, wobei die bestehende Produktionsanlage umfasst:
• einen Luftkompressor zum Bereitstellen eines Druckluftstroms;
• eine Mischvorrichtung zum Mischen des Druckluftstroms mit einem Ammoniakgasstrom, um ein Ammoniak/sauerstoffhaltiges-Gas-Gemisch zu erzeugen;
• einen Ammoniakkonverter, der bei einem Druck von gleich oder höher als P1 aber niedriger als P2 betrieben werden kann, zur Oxidation von Ammoniak in dem Ammoniak/sauerstoffhaltiges-Gas-Gemisch, um ein NOₓ-Gas/DampfGemisch, das Wasser und Stickoxid umfasst, zu erzeugen;
• einen ersten Gaskühler/Kondensator stromabwärts des Ammoniakkonverters, um ein wässriges verdünntes Salpetersäuregemisch und einen gasförmigen NOₓ-Strom zu erzeugen;
• einen NOₓ-Gaskompressor zum Komprimieren des gasförmigen NOₓ-Stroms, um einen druckbeaufschlagten NOx-Gasstrom mit einem Druck P2 zu erzeugen;
• einen Absorptionsturm zum Absorbieren der NOₓ-Gase aus dem druckbeaufschlagten NOₓ-Gasstrom in Wasser, um einen Strom von rohem Salpetersäure-enthaltendem NOₓ-Restgas und ein Endgas, das NOₓ-Gase umfasst, zu erzeugen;
• ein Wärmetauschsystem zum Wärmetausch zwischen dem NOₓ-Gas/Dampf-Gemisch und dem Endgas, insbesondere zum Erhitzen eines Endgasstroms mit der Wärme aus dem NOx-Gas/Dampf-Gemisch aus dem Ammoniakkonverter;
• einen zweiten Gaskühler/Kondensator zum Abtrennen und Kondensieren von Dampf aus dem komprimierten NOₓ-Gasstrom zwischen dem NOx-Kompressor und dem Absorptionsturm, und
• einen Endgasexpander zum Expandieren eines Endgasstroms stromabwärts des Absorptionsturms zum Erzeugen eines expandierten Endgases mit einem Druck P1, wobei der Endgasexpander den NOₓ-Gaskompressor wenigstens teilweise mit Energie versorgen kann
zu einer Produktionsanlage nach einem der Ansprüche 1 bis 8, umfassend die Schritte:
• Einführen einer Druckluftquelle in Fluidverbindung mit der Produktionsanlage;
• Einführen einer Zufuhr oder Quelle eines sauerstoffreichen Gases, wie z.B. eine Hochdruck-Wasserelektrolysevorrichtung, die einen Teil eines ersten sauerstoffhaltigen Gases bereitstellt, stromaufwärts der Mischvorrichtung und in Fluidverbindung damit;
• Einführen eines Mittels zum Regulieren der Konzentration von Ammoniak und/oder Sauerstoff in den Ammoniakkonverter, insbesondere eines Mittels zum Steuern des Flusses des sauerstoffreichen Gases oder des Flusses des ersten sauerstoffhaltigen Gases und/oder eines Mittels zum Regulieren des Flusses des Ammoniakgasstroms, um das molare Verhältnis von Sauerstoff zu Ammoniak in dem Ammoniakkonverter bei einem Verhältnis von wenigstens 1,2 oder wenigstens 1,25, insbesondere zwischen 1,2 und 9 oder zwischen 1,25 und 9, zu halten;
• Einführen einer Zufuhr eines zweiten sauerstoffhaltigen Gases, das entweder (i) einen Druck von gleich oder höher als P1 und bis zu P2 aufweist, zur Zufuhr von Sauerstoff stromaufwärts des NOx-Gaskompressors oder (ii) einen Druck von höher als P2 aufweist, zur Zufuhr von Sauerstoff zu dem komprimierten NOx-Gasstrom, so dass ein Endgasstrom wenigstens 0,5 Vol.-% Sauerstoff enthält;
• Einführen eines Mittels zum Aufteilen eines Endgasstroms in einen ersten Endgasstrom und einen zweiten Endgasstrom, wobei der erste Endgasstrom einen Druck von gleich oder höher als P1 und bis zu P2 aufweist und in Fluidverbindung mit dem sauerstoffreichen Gas steht, das bei Mischen mit dem sauerstoffreichen Gas das erste sauerstoffhaltige Gas bereitstellt;
• insbesondere Einführen eines Mittels zum Einstellen der Menge an Endgas, das in den ersten Endgasstrom und den zweiten Endgasstrom aufgeteilt wird; und
• Entfernen des Luftkompressors.

## Revendications

1. Installation de production d'acide nitrique à consommation d'énergie et émissions réduites, comprenant :
• une source de gaz riche en oxygène, de préférence une source de gaz riche en oxygène sous pression, telle qu'un électrolyseur d'eau à haute pression ;
• un appareil de mélange en aval de la source de gaz riche en oxygène, pour mélanger un premier gaz contenant de l'oxygène avec un flux gazeux d'ammoniac, afin de produire un mélange gazeux contenant de l'ammoniac et de l'oxygène ;
• un convertisseur d'ammoniac, de préférence pouvant fonctionner à une pression égale ou supérieure à P1 et inférieure à P2, pour oxyder l'ammoniac présent dans le mélange gazeux contenant de l'ammoniac et de l'oxygène, afin de produire un mélange gazeux NOx/vapeur comprenant de l'eau et de l'oxyde nitrique ;
• un moyen de régulation de la concentration d'ammoniac et/ou d'oxygène dans le convertisseur d'ammoniac, de préférence un moyen de régulation du débit du premier gaz riche en oxygène et/ou un moyen de régulation du débit du flux gazeux d'ammoniac, afin de maintenir le rapport molaire oxygène/ammoniac à l'intérieur du convertisseur d'ammoniac à un rapport d'au moins 1,2 ;
• un premier refroidisseur/condenseur de gaz en aval du convertisseur d'ammoniac, pour produire un mélange aqueux d'acide nitrique dilué et un flux gazeux de NOₓ ;
• un compresseur de gaz NOₓ pour comprimer le flux gazeux de NOₓ, afin de produire un flux gazeux de NOₓ comprimé à une pression P2 ;
• une tour d'absorption pour absorber les gaz NOₓ provenant du flux gazeux de NOₓ comprimé dans de l'eau, afin de produire un flux gazeux de NOₓ résiduel brut contenant de l'acide nitrique et un gaz résiduaire comprenant des gaz NOₓ, comprenant une sortie de gaz résiduaire de tour d'absorption pour évacuer le gaz résiduaire ;
• un système d'échange de chaleur situé en amont du refroidisseur/condenseur de gaz pour échanger de la chaleur entre le mélange gazeux NOₓ/vapeur et le gaz résiduaire, de préférence pour chauffer un flux de gaz résiduaire à l'aide de la chaleur du mélange gazeux NOx/vapeur provenant du convertisseur d'ammoniac ;
• un deuxième refroidisseur/condenseur de gaz pour séparer et condenser la vapeur provenant du flux gazeux de NOₓ comprimé, de préférence avant l'introduction de vapeur dans la tour d'absorption ;
• une alimentation pour un deuxième gaz contenant de l'oxygène ayant soit (i) une pression égale ou supérieure à P1 et allant jusqu'à P2, pour introduire de l'oxygène en aval du convertisseur d'ammoniac et en amont du compresseur de gaz NOx, ou (ii) une pression supérieure à P2, pour introduire de l'oxygène dans le flux gazeux de NOx comprimé,
• un moyen de régulation du débit du deuxième gaz contenant de l'oxygène, de telle sorte qu'un flux de gaz résiduaire contienne au moins 0,5 % en volume d'oxygène ; et
• un premier moyen de détente, de préférence un détendeur de gaz résiduaire, situé en aval du système d'échange de chaleur, pour détendre un flux de gaz résiduaire en aval de la tour d'absorption, afin de produire un premier gaz résiduaire détendu à une pression égale ou supérieure à P1 et inférieure à P2, le premier moyen de détente, de préférence le détendeur de gaz résiduaire, pouvant alimenter au moins partiellement le compresseur de gaz NOₓ ;
**caractérisée en ce que** l'installation de production comprend en outre :
• un moyen de séparation d'un gaz résiduaire en un premier flux de gaz résiduaire et un deuxième flux de gaz résiduaire, le premier flux de gaz résiduaire étant en communication fluidique avec le gaz riche en oxygène, de préférence, le premier flux de gaz résiduaire ayant une pression égale ou supérieure à P1 et allant jusqu'à P2, et mélange du gaz riche en oxygène et du premier flux de gaz résiduaire produisant le premier gaz contenant de l'oxygène.

2. Installation de production d'acide nitrique selon la revendication 1, comprenant de préférence une source d'air comprimé pour mettre sous pression le système, de préférence lors du démarrage, en communication fluidique avec un système comprenant :
• une source de gaz riche en oxygène, de préférence une source de gaz riche en oxygène sous pression, telle qu'un électrolyseur d'eau à haute pression ;
• un appareil de mélange en aval de la source du gaz riche en oxygène, pour mélanger un premier gaz contenant de l'oxygène avec un flux gazeux d'ammoniac, afin de produire un mélange gazeux contenant de l'ammoniac et de l'oxygène ;
• un moyen de mesure de la concentration en oxygène dans le premier gaz contenant de l'oxygène ;
• un moyen de réglage de la concentration en oxygène dans le premier gaz contenant de l'oxygène de telle sorte que le rapport molaire oxygène/ammoniac à l'entrée du convertisseur d'ammoniac soit d'au moins 1,2 ou d'au moins 1,25, de préférence compris entre 1,2 et 9 ou 1,25 et 9 ;
• un moyen de réglage de l'alimentation en flux gazeux d'ammoniac dans l'appareil de mélange ;
• un convertisseur d'ammoniac pouvant fonctionner à une pression P1, pour oxyder l'ammoniac présent dans le mélange gazeux contenant de l'ammoniac et de l'oxygène, afin de produire un mélange gazeux NOₓ/vapeur comprenant de l'eau et de l'oxyde nitrique ;
• un moyen de mesure de la température dans le convertisseur d'ammoniac ;
• un premier refroidisseur/condenseur de gaz en aval du convertisseur d'ammoniac, pour produire un mélange aqueux d'acide nitrique dilué et un flux gazeux de NOx ;
• un compresseur de gaz NOx pour comprimer le flux gazeux de NOx, afin de produire un flux gazeux de NOx comprimé à une pression P2 ;
• une tour d'absorption pour absorber les gaz NOx provenant du flux gazeux de NOx comprimé dans l'eau, afin de produire un flux gazeux de NOx résiduel contenant de l'acide nitrique brut et un gaz résiduaire comprenant des gaz NOₓ , comprenant une sortie de gaz résiduaire de tour d'absorption pour évacuer le gaz résiduaire ;
• un moyen de mesure de la concentration en oxygène dans un flux de gaz résiduaire en aval de la tour d'absorption ;
• un système d'échange de chaleur situé en amont du refroidisseur/condenseur de gaz pour échanger de la chaleur entre le mélange gazeux NOx/vapeur et le gaz résiduaire ;
• un deuxième refroidisseur/condenseur de gaz supplémentaire pour séparer et condenser la vapeur provenant du flux gazeux de NOx comprimé, afin de produire un flux gazeux de NOx comprimé, de préférence ayant une température comprise entre 20 et 60 °C ;
• une alimentation en un deuxième gaz contenant de l'oxygène ayant soit (i) une pression égale ou supérieure à P1 et allant jusqu'à P2, pour introduire de l'oxygène en amont du compresseur de gaz NOₓ ; ou une pression supérieure à P2, pour introduire de l'oxygène dans le flux gazeux de NOx comprimé, de telle sorte que le gaz résiduaire contienne au moins 0,5 % en volume d'oxygène ; et
• un détendeur de gaz résiduaire situé en aval du système d'échange de chaleur, pour détendre un flux de gaz résiduaire en aval de la tour d'absorption, afin de produire un premier gaz résiduaire détendu à une pression P1, le détendeur de gaz résiduaire pouvant alimenter au moins partiellement le compresseur de gaz NOₓ ;
**caractérisée en ce que** le système comprend en outre :
• un moyen de séparation d'un flux de gaz résiduaire en aval de la tour d'absorption en un premier flux de gaz résiduaire, en communication fluidique avec le gaz riche en oxygène et un deuxième flux de gaz résiduaire ; et
• un moyen de réglage de la quantité de gaz résiduaire séparée en premier flux de gaz résiduaire et deuxième flux de gaz résiduaire.

3. Installation de production selon la revendication 1 ou 2, le système comprenant en outre l'un ou plusieurs parmi :
• une turbine à vapeur, pouvant alimenter au moins partiellement le compresseur de gaz NOx ;
• un échangeur de chaleur pour échanger de la chaleur entre le premier gaz résiduaire détendu et un flux de gaz résiduaire plus froid, le premier gaz résiduaire détendu sortant de l'échangeur de chaleur de préférence à une température inférieure à 300 °C, et le moyen de séparation étant positionné en aval de l'échangeur de chaleur et en communication fluidique avec le premier gaz résiduaire détendu ;
• une unité de traitement d'élimination de NOₓ ; et
• un deuxième moyen de détente pour détendre le deuxième flux de gaz résiduaire à pression atmosphérique, afin de produire un deuxième gaz résiduaire détendu.

4. Installation de production selon l'une quelconque des revendications 1 à 3, comprenant en outre un blanchisseur pour blanchir le flux gazeux de NOx résiduel brut contenant de l'acide nitrique, afin de produire un flux d'acide nitrique blanchi, comportant une entrée pour un gaz de blanchiment riche en oxygène, et une sortie pour les effluents gazeux en communication fluidique avec tout flux gazeux en aval du convertisseur d'ammoniac et en amont du compresseur de gaz NOx si le blanchisseur fonctionne à une pression égale ou supérieure à P1 et allant jusqu'à P2, ou en communication fluidique avec tout flux en aval du compresseur de gaz NOx et en amont de la tour d'absorption si le blanchisseur fonctionne à une pression supérieure à P2, de telle sorte que l'alimentation pour le deuxième gaz contenant de l'oxygène provienne au moins partiellement des effluents gazeux.

5. Installation de production selon la revendication 4, dans laquelle une partie du gaz riche en oxygène ou une partie du premier gaz contenant de l'oxygène ou une partie du gaz résiduaire est en communication fluidique avec l'entrée du blanchisseur, de telle sorte que le gaz de blanchiment riche en oxygène est au moins partiellement fourni par une partie du gaz riche en oxygène, par une partie du premier gaz contenant de l'oxygène ou par une partie d'un flux de gaz résiduaire.

6. Installation de production selon l'une quelconque des revendications 1 à 5, comprenant en outre un flux d'un deuxième gaz riche en oxygène en communication fluidique directe avec tout flux de gaz résiduaire, de préférence un flux d'un gaz riche en oxygène sous pression en communication fluidique directe avec tout flux de gaz résiduaire en aval de la tour d'absorption ou en amont du premier moyen de détente.

7. Installation de production selon l'une quelconque des revendications 1 à 6, dans laquelle le premier gaz riche en oxygène, le deuxième gaz contenant de l'oxygène, le gaz de blanchiment riche en oxygène et les effluents gazeux de blanchisseur sont tous au moins partiellement fournis par un électrolyseur d'eau, de préférence un électrolyseur d'eau à haute pression.

8. Installation de production selon l'une quelconque des revendications 1 à 6, dans laquelle la communication fluidique entre la source d'air sous pression et le système est en communication fluidique directe avec le gaz riche en oxygène.

9. Procédé de production d'acide nitrique à consommation d'énergie et émissions réduites, dans une installation de production selon l'une quelconque des revendications 1 à 8, comprenant les étapes consistant à :
avant l'étape c), fournir ou préparer un gaz riche en oxygène et un premier gaz contenant de l'oxygène, et fournir un flux gazeux d'ammoniac ;
c) introduire le flux gazeux d'ammoniac et un premier gaz contenant de l'oxygène dans l'appareil de mélange, de façon à produire le mélange gazeux contenant de l'ammoniac et de l'oxygène ;
d) oxyder l'ammoniac présent dans le mélange gazeux contenant de l'ammoniac et de l'oxygène dans le convertisseur d'ammoniac, de préférence à une pression égale ou supérieure à P1 et inférieure à P2 et à une température comprise entre 800 et 950 °C, de façon à produire le mélange gazeux NOx/vapeur comprenant de l'eau et de l'oxyde nitrique ;
e) refroidir le gaz NOx présent dans le mélange gazeux NOx/vapeur dans le système d'échange de chaleur et dans le premier refroidisseur/condenseur de gaz, de façon à produire un mélange aqueux d'acide nitrique dilué et un flux gazeux de NOₓ ;
f) comprimer le flux gazeux de NOₓ dans le compresseur de gaz NOₓ, de façon à produire le flux gazeux de NOₓ sous pression ayant une pression P2 ;
g) absorber le flux gazeux de NOₓ sous pression dans la tour d'absorption, de façon à produire le flux gazeux de NOx résiduel brut contenant de l'acide nitrique et le gaz résiduaire comprenant des gaz NOₓ ;
h) chauffer le gaz résiduaire dans le système d'échange de chaleur, à l'aide de la chaleur du mélange gazeux NOₓ/vapeur provenant du convertisseur d'ammoniac, de préférence à une température comprise entre 150 et 650 °C ;
i) refroidir le flux gazeux de NOₓ sous pression dans le deuxième refroidisseur/condenseur de gaz, de façon à produire un flux gazeux de NOₓ sous pression, de préférence ayant une température comprise entre 20 et 60 °C ; et
j) détendre au moins une partie du gaz résiduaire obtenu à l'étape h) dans un premier moyen de détente, de façon à produire un premier gaz résiduaire détendu ;
**caractérisé en ce que** le procédé comprend en outre les étapes consistant à :
k) séparer un flux de gaz résiduaire à l'aide d'un moyen de séparation en un premier flux de gaz résiduaire et un deuxième flux de gaz résiduaire et mélanger le premier flux de gaz résiduaire avec le gaz riche en oxygène, de façon à produire le premier gaz contenant de l'oxygène ;
m) régler le débit du gaz riche en oxygène mélangé à l'étape k) ou le débit du flux gazeux d'ammoniac, de telle sorte que le rapport molaire oxygène/ammoniac à l'entrée du convertisseur d'ammoniac soit maintenu à un rapport d'au moins 1,2 ou d'au moins 1,25, de préférence compris entre 1,2 et 9 ou entre 1,25 et 9 ; et
q) régler le débit du gaz riche en oxygène à une pression égale ou supérieure à P1 et allant jusqu'à P2 en amont du compresseur de gaz NOₓ, ou à une pression supérieure à P2 en aval du compresseur de gaz NOₓ, de telle sorte que la concentration en oxygène dans un flux de gaz résiduaire soit maintenue à une concentration d'au moins 0,5 % en volume ;

10. Procédé de production d'acide nitrique à consommation d'énergie et émissions réduites, dans une installation de production selon la revendication 9, comprenant les étapes consistant à :
a) de préférence, mettre sous pression le système en introduisant de l'air sous pression dans le système ;
b) de préférence, faire fonctionner le compresseur de gaz NOₓ ou un premier moyen de détente, de préférence un détendeur de gaz résiduaire, au moyen d'une énergie externe, de façon à générer un écoulement d'air sous pression dans le système et une pression P2, en aval du compresseur de gaz NOₓ ;
c) introduire le flux gazeux d'ammoniac et un premier gaz contenant de l'oxygène dans l'appareil de mélange, de façon à produire le mélange gazeux contenant de l'ammoniac et de l'oxygène ;
d) oxyder l'ammoniac présent dans le mélange gazeux contenant de l'ammoniac et de l'oxygène dans le convertisseur d'ammoniac, de préférence à une pression P1 et à une température comprise entre 800 et 950 °C, de façon à produire le mélange gazeux NOx/vapeur comprenant de l'eau et de l'oxyde nitrique ;
e) refroidir le gaz NOx présent dans le mélange gazeux NOx/vapeur dans le système d'échange de chaleur et dans le premier refroidisseur/condenseur de gaz, de façon à produire un mélange aqueux d'acide nitrique dilué et un flux gazeux de NOₓ ;
f) comprimer le flux gazeux de NOx dans le compresseur de gaz NOx, de façon à produire le flux gazeux de NOx sous pression ayant une pression P2 ;
g) absorber le flux gazeux de NOₓ sous pression dans la tour d'absorption, de façon à produire le flux gazeux de NOx résiduel brut contenant de l'acide nitrique et le gaz résiduaire comprenant des gaz NOₓ ;
h) chauffer le gaz résiduaire dans le système d'échange de chaleur, à l'aide de la chaleur du mélange gazeux NOₓ/vapeur provenant du convertisseur d'ammoniac, de préférence à une température comprise entre 150 et 650 °C ;
i) refroidir le flux gazeux de NOₓ sous pression dans le deuxième refroidisseur/condenseur de gaz, de façon à produire un flux gazeux de NOₓ sous pression, de préférence ayant une température comprise entre 20 et 60 °C ; et
j) détendre le gaz résiduaire obtenu à l'étape h) dans le détendeur de gaz résiduaire, de façon à produire le premier gaz résiduaire détendu ;
**caractérisé en ce que** le procédé comprend en outre les étapes consistant à :
k) séparer un flux de gaz résiduaire à l'aide d'un moyen de séparation en un premier flux de gaz résiduaire et un deuxième flux de gaz résiduaire et mélanger le premier flux de gaz résiduaire avec le gaz riche en oxygène, de façon à produire le gaz contenant de l'oxygène ;
l) mesurer la concentration en oxygène dans le gaz contenant de l'oxygène ;
m) si la concentration en oxygène mesurée à l'étape l) est telle que le rapport molaire oxygène/ammoniac dans le convertisseur d'ammoniac est inférieur à 1,2 ou 1,25, régler l'alimentation en gaz riche en oxygène, par exemple ayant une pression P2, et étant mélangé à l'étape k) ou régler l'alimentation en flux gazeux d'ammoniac à l'étape c), de telle sorte que le rapport molaire oxygène/ammoniac à l'entrée du convertisseur d'ammoniac soit d'au moins 1,2 ou 1,25, de préférence compris entre 1,2 et 9 ou entre 1,25 et 9 ;
n) mesurer la température dans le convertisseur d'ammoniac ;
o) régler le volume du premier flux de gaz résiduaire mélangé à l'étape k) ou du flux gazeux d'ammoniac introduit à l'étape c), si la température mesurée à l'étape n) est en dehors de la plage de 800 à 950 °C, de sorte que la température dans le convertisseur d'ammoniac soit maintenue dans la plage de 800 à 950 °C ;
p) mesurer la concentration en oxygène dans un gaz résiduaire en aval de la tour d'absorption ;
q) si la concentration en oxygène mesurée à l'étape p) est inférieure à 0,5 % en volume d'oxygène, régler l'alimentation en gaz riche en oxygène à une pression égale ou supérieure à P1 et allant jusqu'à P2 en amont du compresseur de gaz NOₓ, ou à une pression supérieure à P2 en aval du compresseur de gaz NOₓ, ou régler le débit du deuxième gaz contenant de l'oxygène, de telle sorte que le gaz résiduaire contienne au moins 0,5 % en volume d'oxygène ;
r) répéter les étapes c) à q).

11. Procédé selon la revendication 9 ou 10, dans lequel le premier flux de gaz résiduaire, en particulier le premier flux de gaz résiduaire détendu, mélangé à l'étape k) est de préférence obtenu après l'étape j), et le procédé comprenant en outre les étapes consistant à :
s) de préférence avant l'étape k), chauffer, dans l'échangeur de chaleur, un flux de gaz résiduaire qui est plus froid que le premier gaz résiduaire détendu avec le premier gaz résiduaire détendu, de façon à amener le premier gaz résiduaire détendu à une température inférieure à 300°C, de préférence avant l'étape k), chauffer, dans l'échangeur de chaleur, le gaz résiduaire obtenu à l'étape g) à l'aide du premier gaz résiduaire détendu obtenu à l'étape j), de façon à amener le gaz résiduaire à mélanger à l'étape k) à une température inférieure à 300 °C ;
t) traiter le flux de gaz résiduaire, de préférence obtenu à l'étape s, dans l'unité de traitement d'élimination de NOₓ ;
u) détendre le deuxième flux de gaz résiduaire dans le deuxième moyen de détente, de façon à produire le deuxième gaz résiduaire détendu ; et
v) récupérer au moins une partie de la vapeur générée dans le convertisseur d'ammoniac dans la turbine à vapeur.

12. Procédé selon l'une quelconque des revendications 9 à 11, comprenant en outre l'étape consistant à :
w) blanchir le flux gazeux de NOₓ résiduel brut contenant de l'acide nitrique dans le blanchisseur, de façon à produire le flux d'acide nitrique blanchi.

13. Procédé selon la revendication 12, comprenant en outre l'étape consistant à :
w1) introduire une partie du gaz riche en oxygène ou une partie du premier gaz contenant de l'oxygène obtenu à l'étape k) ou une partie du gaz résiduaire obtenu à l'étape g), à l'entrée du blanchisseur à l'étape w).

14. Procédé selon l'une quelconque des revendications 9 à 13, comprenant en outre l'étape consistant à :
x) introduire un flux d'un gaz riche en oxygène, de préférence sous la forme d'un flux d'un gaz riche en oxygène sous pression, dans un flux de gaz résiduaire, de préférence dans un flux de gaz résiduaire en amont du premier moyen de détente.

15. Procédé selon l'une quelconque des revendications 9 à 14, comprenant en outre les étapes consistant à :
y) faire fonctionner l'électrolyseur d'eau, de façon à produire de l'oxygène gazeux, de préférence faire fonctionner un électrolyseur d'eau à haute pression de façon à produire de l'oxygène gazeux sous pression ; et
z) fournir, à partir de l'oxygène produit par l'électrolyseur d'eau à l'étape y), au moins une partie du gaz riche en oxygène, du deuxième gaz contenant de l'oxygène, du gaz de blanchiment riche en oxygène et des effluents gazeux de blanchisseur.

16. Procédé selon l'une quelconque des revendications 10 à 15, dans lequel, à l'étape a), l'air sous pression est introduit dans le flux en communication fluidique directe avec le gaz riche en oxygène.

17. Utilisation de l'installation de production selon l'une quelconque des revendications 1 à 8 pour réaliser le procédé selon l'une quelconque des revendications 9 à 16.

18. Procédé de rénovation d'une installation de production d'acide nitrique existante, l'installation de production d'acide nitrique existante comprenant :
• un compresseur d'air pour fournir un flux d'air comprimé ;
• un appareil de mélange, pour mélanger le flux d'air comprimé avec un flux gazeux d'ammoniac, afin de produire un mélange gazeux contenant de l'ammoniac et de l'oxygène ;
• un convertisseur d'ammoniac pouvant fonctionner à une pression égale ou supérieure à P1 mais inférieure à P2, pour oxyder l'ammoniac présent dans le mélange gazeux contenant de l'ammoniac et de l'oxygène, afin de produire un mélange gazeux NOₓ/vapeur comprenant de l'eau et de l'oxyde nitrique ;
• un premier refroidisseur/condenseur de gaz en aval du convertisseur d'ammoniac, pour produire un mélange aqueux d'acide nitrique dilué et un flux gazeux de NOₓ ;
• un compresseur de gaz NOₓ pour comprimer le flux gazeux de NOₓ, afin de produire un flux gazeux de NOx sous pression à une pression P2 ;
• une tour d'absorption pour absorber les gaz NOₓ provenant du flux gazeux de NOₓ sous pression dans de l'eau, afin de produire un flux gazeux de NOₓ résiduel brut contenant de l'acide nitrique et un gaz résiduaire comprenant des gaz NOₓ ;
• un système d'échange de chaleur pour échanger de la chaleur entre le mélange gazeux NOₓ/vapeur et le gaz résiduaire, de préférence pour chauffer un flux de gaz résiduaire à l'aide de la chaleur du mélange gazeux NOx/vapeur provenant du convertisseur d'ammoniac ;
• un deuxième refroidisseur/condenseur de gaz pour séparer et condenser la vapeur provenant du flux gazeux de NOₓ comprimé entre le compresseur de NOx et la tour d'absorption, et
• un détendeur de gaz résiduaire pour détendre un flux de gaz résiduaire en aval de la tour d'absorption, afin de produire un gaz résiduaire détendu à une pression P1, le détendeur de gaz résiduaire pouvant alimenter au moins partiellement le compresseur de gaz NOₓ ;
en une installation de production selon l'une quelconque des revendications 1 à 8, comprenant les étapes consistant à :
• introduire une source d'air sous pression en communication fluidique avec l'installation de production ;
• introduire une alimentation ou une source d'un gaz riche en oxygène, telle qu'un électrolyseur d'eau à haute pression, fournissant une partie d'un premier gaz contenant de l'oxygène, en amont de l'appareil de mélange et en communication fluidique avec celui-ci ;
• introduire un moyen de régulation de la concentration en ammoniac et/ou en oxygène dans le convertisseur d'ammoniac, de préférence un moyen de régulation du débit du gaz riche en oxygène ou le débit du premier gaz contenant de l'oxygène et/ou un moyen de régulation du débit du flux gazeux d'ammoniac, afin de maintenir le rapport molaire oxygène/ammoniac à l'intérieur du convertisseur d'ammoniac à un rapport d'au moins 1,2 ou d'au moins 1,25, de préférence compris entre 1,2 et 9 ou 1,25 et 9 ;
• introduire une alimentation en un deuxième gaz contenant de l'oxygène ayant soit (i) une pression égale ou supérieure à P1 et allant jusqu'à P2, pour introduire de l'oxygène en amont du compresseur de gaz NOx ; ou (ii) une pression supérieure à P2, pour introduire de l'oxygène dans le flux gazeux de NOx comprimé, de telle sorte qu'un flux de gaz résiduaire contienne au moins 0,5 % en volume d'oxygène ;
• introduire un moyen de séparation d'un flux de gaz résiduaire en un premier flux de gaz résiduaire et un deuxième flux de gaz résiduaire, le premier flux de gaz résiduaire ayant une pression égale ou supérieure à P1 et allant jusqu'à P2, et étant en communication fluidique avec le gaz riche en oxygène, qui, lors du mélange avec le gaz riche en oxygène, produit le premier gaz contenant de l'oxygène ;
• de préférence, introduire un moyen de réglage de la quantité de gaz résiduaire séparée en premier flux de gaz résiduaire et deuxième flux de gaz résiduaire ; et
• retirer le compresseur d'air.
